# EUROPÄISCHE PATENTSCHRIFT

(11) **EP 2 625 312 B1**
(45) Veröffentlichungstag und Bekanntmachung des Hinweises auf die Patenterteilung: **27.05.2015**
(21) Anmeldenummer: 11764189.4
(22) Anmeldetag: 04.10.2011
(51) Int. Cl.: C09D 7/02, C09D 7/06, C09D 133/02, C09D 5/08

(54) **VERFAHREN ZUM PASSIVIEREN VON METALLISCHEN OBERFLÄCHEN MIT WÄSSRIGEN ZUSAMMENSETZUNGEN ENTHALTEND TENSIDE**
METHOD FOR PASSIVATING METALLIC SURFACES WITH AQUEOUS COMPOSITIONS COMPRISING SURFACTANTS
PROCÉDÉ DE PASSIVATION DE SURFACES MÉTALLIQUES AVEC DES COMPOSITIONS AQUEUSES CONTENANT DES AGENTS TENSIOACTIFS

(30) Priorität: 05.10.2010 EP 10186565
(43) Veröffentlichungstag der Anmeldung: 14.08.2013
(73) Patentinhaber: BASF SE, 67056 Ludwigshafen (DE)
(72) Erfinder: VANDERMEULEN, Guido, 68549 Ilvesheim (DE); FESSENBECKER, Achim, 68753 Waghäusel (DE); LAUBUSCH, Bernd, 68642 Bürstadt (DE); WITTELER, Helmut, 67157 Wachenheim (DE); TROPSCH, Jürgen, 67354 Römerberg (DE)
(86) Internationale Anmeldenummer: PCT/EP2011/067262
(87) Internationale Veröffentlichungsnummer: WO 2012/045713

(56) Entgegenhaltungen:
- WO-A1-2007/052064
- WO-A1-2008/110816
- DE-A1- 19 510 825
- DE-A1-102005 027 568
- US-A1- 2006 042 726
- US-A1- 2006 112 972

## Beschreibung

Die vorliegende Erfindung betrifft ein Verfahren zur Passivierung von metallischen Oberflächen unter Verwendung einer wässrigen, sauren Zusammensetzung, die ein saure Gruppen umfassendes Polymer sowie ein nicht-ionisches Tensid auf Basis alkoxylierter Alkohole enthält.

Weiterer Gegenstand der vorliegenden Erfindung ist eine wässrige, saure Zusammensetzung zur Passivierung einer metallischen Oberfläche, wobei die Zusammensetzung ein saure Gruppen umfassendes Polymer und ein spezielles, nicht-ionisches Tensid enthält. Die Erfindung betrifft auch die Verwendung der wässrigen, sauren Zusammensetzung zur Passivierung einer Metalloberfläche.

Ebenso betrifft die vorliegende Erfindung eine Beschichtung auf einer metallischen Oberfläche, erhältlich durch das erfindungsgemäß beschriebene Verfahren.

Metallische Werkstoffe, insbesondere Eisen und Stahl, werden üblicherweise verzinkt, um sie vor korrosiven Umwelteinflüssen zu schützen. Der Korrosionsschutz des Zinks beruht darauf, dass es unedler ist als der metallische Werkstoff selbst und deshalb zunächst selbst korrodiert. Das Zink kann als so genannte Opferelektrode gegenüber der metallischen Oberfläche fungieren. Da die Zinkschicht selbst auch der Korrosion (Weißrost) unterworfen ist, wird der korrosive Angriff auf eine solche Zinkschicht häufig durch Aufbringen einer so genannten Passivierungsschicht verzögert. Die Passivierungsschicht verzögert den korrosiven Angriff auf die Metalloberfläche und kann gleichzeitig einer Verbesserung der Haftung von gegebenenfalls aufzubringenden Lackschichten dienen. Anstelle des Begriffs Passivierungsschicht wird der Begriff Konversionsschicht häufig synonym verwendet.

Das Aufbringen von Passivierungsschichten erfolgt beispielsweise bei verzinkten Metallteilen (z.B. galvanisch verzinkten oder heißverzinkten Trägern), die anschließend lackiert werden. Das Aufbringen erfolgt auch bei solchen Teilen, die ohne Lackierung zum Einsatz kommen. Ebenso werden metallische Oberflächen aus Aluminium oder Aluminiumlegierungen häufig mit einer Passivierungsschicht versehen, insbesondere dann, wenn sie anschließend lackiert werden sollen.

Zur Herstellung von flächigen, metallischen Werkstücken, wie beispielsweise Automobilteilen, Karosserieteilen, Geräteverkleidungen, Fassadenverkleidungen, Deckenverkleidungen oder Fensterprofilen, werden als Rohmaterial heutzutage üblicherweise lange Metallbänder eingesetzt, die mittels geeigneter Techniken zu den gewünschten Formteilen geformt und/oder zusammengefügt werden. Die Korrosionsschutzbehandlung derartiger metallischer Materialien erfolgt üblicherweise in mehrstufigen Prozessen. Die Oberfläche behandelter Metalle weist oftmals mehrere verschiedene Schichten auf. Eine Korrosionsschutzbehandlung kann an verschiedenen Stellen des Herstell prozesses vorgenommen werden. Hierbei kann es sich sowohl um temporären Korrosionsschutz als auch um permanenten Korrosionsschutz handeln. Ein temporärer Schutz wird beispielsweise nur zum Lagern oder Transportieren des metallischen Werkstückes, z.B. des Metallbandes, aufgebracht und vor der endgültigen Verarbeitung wieder entfernt.

Technisch und wirtschaftlich von besonderer Bedeutung sind Bänder mit einer verzinkten Oberfläche, insbesondere Bänder aus galvanisch verzinktem oder feuerverzinktem Eisen bzw. Eisenlegierungen wie z.B. Stahl. Weiterhin von Bedeutung sind Metallbänder aus Aluminium bzw. Aluminiumlegierungen.

In der Regel werden auf die passivierte Oberfläche eine oder mehrere zusätzliche Lackschichten aufgebracht. Sie dienen beispielsweise dazu, die Passivierungsschicht und das Metall vor korrosiven Gasen und/oder Flüssigkeiten und/oder vor mechanischen Beschädigungen (wie beispielsweise Steinschlag) zu schützen. Sie kann auch ästhetischen Zwecken dienen. Lackschichten sind üblicherweise deutlich dicker als Passivierungsschichten. Typische Dicken für eine Schicht aus Lack reichen von 4 µm bis 400 µm.

Im Stand der Technik wurden Passivierungsschichten auf Zink- oder Aluminiumoberflächen üblicherweise durch Behandlung des zu schützenden Werkstücks mit wässrigen sauren Lösungen von Chromaten (z.B. CrO₃) oder sauren, wässrige Lösungen von Cr(III)-Salzen (siehe EP-A 0 907 762) erhalten.

In Gegenwart von Luftsauerstoff bildet sich auf der Oberfläche von Zink oder Zinklegierungen, Aluminium oder Aluminiumlegierungen zunächst eine dünne Oxidschicht, die den korrosiven Angriff auf das darunter liegende Metall verlangsamt. Typischerweise löst sich bei den Passivierungsverfahren basierend auf Chromverbindungen dieser vorhandene Oxidfilm und ein Teil des zu schützenden Metalls auf, und wird zumindest teilweise in einen Film auf der Metalloberfläche eingebaut. Dieser Film ähnelt typischerweise dem natürlicherweise vorhandenen Oxidfilm und enthält in der Regel gezielt eingebrachtes Phosphat, Schwermetalle und/oder Fluoride. Die so erhaltenen Passivierungs- oder Konversionsschichten soll das darunter liegende Metall wirksam vor einem korrosiven Angriff schützen.

In neuerer Zeit wurden auch Passivierungsverfahren z.B. für metallbeschichtete Stahlbleche und Stückgut (z.B. feuerverzinkter Stahl) auf der Grundlage von Polymeren als organische Filmbildner entwickelt. Hierbei werden meist saure wässrige Lösungen von verschiedenen filmbildenden Polymeren, welche z.B. Carboxyl-, Phosphorsäure- und/oder Phosphonsäure-Gruppen aufweisen, zur Ausbildung der Passivierungsschicht eingesetzt. Nach dem Auftragen der sauren Formulierung wird typischerweise die Metalloberfläche (z.B. Zink) angelöst. In der Regel werden mehrwertige Metall-Ionen (z.B. Zn²⁺) freigesetzt und der pH-Wert in Nähe der Metalloberfläche steigt. Es kann eine Vernetzung und Filmbildung der sauren Polymere mit den mehrwertigen Metall-Ionen erfolgen.

Da bei dem beschriebenen Passivierungsverfahren unter Verwendung von sauren Polymeren der Einsatz von Schwermetallen wie Chrom vermieden wird, gewinnen diese Passivierungsverfahren auf Polymerbasis stetig an Bedeutung. Im Stand der Technik sind verschiedene meist saure Passivierungszubereitungen bekannt, die in der Regel ein wasserlösliches, säuregruppenhaltiges, filmbildendes Polymer enthalten. Auch wurden bereits Verfahren zur Passivierung unter Verwendung dieser Zubereitungen beschrieben

DE-A 195 16 765 betrifft ein Verfahren zur Erzeugung von Konversionsschichten auf Oberflächen aus Zink oder Aluminium durch Behandlung mit einer sauren Lösung, die einen organischen Filmbildner sowie Aluminiumionen in Form eines wasserlöslichen Komplexes mit chelat-bildenden Carbonsäuren und Phosphorsäuren enthält. Als organische Filmbildner werden carboxylgruppen-haltige Polymere, insbesondere Homo- und/oder Copolymerisate von Acryl- und/oder Methacrylsäure genannt.

In WO 2004/074372 wird die Passivierung von metallischen Oberflächen unter Verwendung von Co-Polymeren enthaltend Acrylsäure und Vinylphosphonsäure und/oder Maleinsäure beschrieben, wobei die Passivierungsformulierung weitere Komponenten enthalten kann.

WO 2008/012248 beschreibt saure Zubereitungen zum Passivieren von metallischen Oberflächen enthaltend Co-Polymere aufgebaut aus Monomethacrylsäureestern mit hydrophoben Gruppen (z.B. Hydroxyethylacetat), Monomeren mit Phosphonsäuregruppen (z.B. Vinylphosphonsäure) und Monomeren mit Carboxyl-Gruppen (z.B. Acrylsäure).

WO 2006/134116 beschreibt ein Verfahren zur Passivierung von metallischen Oberflächen durch Behandlung der Oberfläche mit einer wässrigen Zusammensetzung enthaltend säuregruppenhaltigen Polymere und mehrwertige Kationen wie Zink-, Calcium-, Magnesium oder Aluminium-Ionen.

WO 2006/134117 beschreibt ein Verfahren zur Passivierung von metallischen Oberflächen durch Behandlung der Oberfläche mit einer wässrigen Zusammensetzung enthaltend saure Polymere unter Zugabe von Wachsen (z.B. Polyethylenwachsen).

Solche wässrigen Passivierungslösungen zur Verbesserung des Korrosionsschutzes werden oft direkt nach der Verzinkungslinie (z.B. einer Heißverzinkung) auf das verzinkte Stahlband aufgebracht. Der Auftrag erfolgt in der Regel mittels Walztechnik, wobei beispielsweise einfache Abquetschwalzen oder technologisch aufwendigere Roll-Coater zum Einsatz kommen.

Bei der technologisch einfach und preisgünstig zu realisierenden Abquetschwalze wird typischerweise die Passierungslösung auf das verzinkte Stahlband aufgebracht (z.B. aufgesprüht) und dann mittels einer Walze abgequetscht. Mit Hilfe der Abquetschwalzen-Technologie können häufig nur qualitativ unzureichende, d.h. ungleichmäßigere Passivierungsschichten erhalten werden. Wenn besondere Ansprüche an die aufgebrachten Schichten gestellt werden, kommt meist die aufwendigere und kostenintensivere "Roll-Coater-Technik" zum Einsatz. In der Regel wird hierbei die Passivierungslösung zunächst auf eine oder mehrere Walze aufgebracht und dann auf das Stahlband übertragen wird. Mit diesem Verfahren können meist homogenere Passivierungsschicht von relativ gleichmäßiger Schichtdicke erhalten werden.

Die Zeit, die für die Filmbildung, d.h. das Vernetzen, der sauren Polymers zur Verfügung steht, ist normalerweise vergleichsweise kurz. Bei der kontinuierlichen Passivierung eines Stahlbandes bleiben vom Auftragen der Formulierung auf das Stahlband bis zum Trocknen des beschichteten Bandes im Trockner je nach Bandgeschwindigkeit meist nur wenige Sekunden, typischerweise z.B. 2 bis 10 Sekunden.

In WO 2009/047209 ist ein kontinuierliches Verfahren zur Beschichtung von Stahlbändern beschrieben, wobei die Passivierungszusammensetzung zunächst auf eine Beschichtungswalze aufgebracht, abgerakelt und dann auf das Stahlband übertragen wird.

Ein generelles Problem beim Aufbringen der Passivierungsschicht auf das Metallband ist das so genannte "Ribbing". Die aufgewalzten, dünnen, wässrigen Flüssigkeitsfilme trocken und verfilmen auf dem noch warmen Bandstahl sehr schnell, noch bevor die wässrige Passivierungslösung das Stahlband vollständig benetzt hat. So können wellenartige Strukturen (Berge und Täler) mit ungleichmäßigen Schichtdicken auf dem Blech entstehen. Da der Korrosionsschutz der Passivierungsschicht typischerweise durch die dünnste Stelle der Passivierungsschicht limitiert wird, weisen solche ungleichmäßig dicken Schichten einen mangelhaften Korrosionsschutz auf.

Aus ökonomischen und ökologischen Gründen wird aber in der Regel eine möglichst dünne Passivierungsschicht angestrebt. Typischerweise übersteigen die aufgetragenen Mengen der Passivierungsbeschichtung 2 g/m² nicht. Dies entspricht einer Schichtdicke von etwa 2 µm. Daher ist bei gleicher durchschnittlicher Auftragsmenge eine gleichmäßige Schicht, ohne Berge und Täler, vorteilhaft gegenüber einer ungleichmäßigen Schicht.

Eine Aufgabe der vorliegenden Erfindung ist die Bereitstellung von Zusammensetzungen und Verfahren zur Behandlung von Metalloberflächen, die zur Ausbildung einer Passivierungsschicht auf Metalloberflächen geeignet sind, wobei eine möglichst gleichmäßige Auflage der Passivierungsfilmschicht, insbesondere ohne wellenförmige Strukturen ("Ribbing") in der Schicht erreicht werden soll. Diese homogene Passivierungsfilmschicht sollte darüber hinaus möglichst dünn sein und eine gute oder verbesserte Korrossionsbeständigkeit aufweisen. Die erfindungsgemäße Passivierungsschicht soll mittels einfacher Walzentechnik (z.B. mittels einer Abquetschwalze) auf die Oberfläche eines Metallbands in einem kontinuierlichen Verfahren aufgetragen werden können.

Die erhaltene Passivierungsschicht soll sowohl für Werkstücke geeignet sein, die anschließend lackiert werden, als auch für solche, die ohne Lackierung zum Einsatz kommen. Dabei ist bei anschließender Lackierung der Werkstücke zu beachten, dass eine ausreichende Haftung der nachfolgenden Lackschicht auf der Passivierungsschicht gewährleistet ist. Dies bedeutet, dass sich die Lackhaftung auf der Passivierungsschicht verbessern (oder zumindest nicht verschlechtern) sollte. Die Güte der Lackhaftung kann mit dem so genannten Gitter-Schnitt-Test (siehe DIN-ISO-Norm 2409) an einer ebenen Metalloberfläche und/oder an einer definiert eingedellten Metalloberfläche bestimmt werden. Hierzu wird ein festgelegtes Gitter-Schnittmuster in die Beschichtung bis zur beschichteten Unterlage eingeschnitten. Dann wird ein definiertes Klebeband über den Gitterschnitt gelegt und abgezogen. Das Abplatzen der beschichteten Gitterelemente wird anschließend visuell bewertet und anhand von Gitterschnitt-Kennwerten üblicherweise in einer Skala von 0 bis 5 angegeben.

Weiterhin ist die Optik von polymerhaltigen Passivierungsschichten von Bedeutung, wobei klare und transparente Schichten gewünscht sind. Die Optik kann durch das so genannte "Auskreiden" beeinträchtigt werden. Hierbei sind die Schichten nicht mehr vollständig klar und transparent, sondern weisen mehr oder weniger intransparente, weiße Flecken auf. "Auskreiden" kann leicht mit Weißrostbildung verwechselt werden und kann die Qualitätskontrolle erschweren. Daher sollten die mit dem erfindungsgemäßen Verfahren bzw. mittels der erfindungsgemäßen Zusammensetzung hergestellten Passivierungsschichten eine klare, transparente Optik und eine geringe Neigung zum Auskreiden aufweisen.

Es wurde überraschenderweise gefunden, dass mit Hilfe von Passivierungszusammensetzungen enthaltend speziell ausgewählte Tenside sehr gleichmäßige, homogene Passivierungsschichten erhalten werden können.

Die erfindungsgemäßen Zusammensetzungen zeigen eine überraschend gute und sehr schnelle Benetzung der metallischen Oberfläche, so dass eine homogene Filmbildung, auch bei Verwendung der einfachen und kostengünstigen Abquetschwalzen-Technologie, gewährleistet ist.

Weiterhin wurde gefunden, dass sich sehr gute Korrosionsbeständigkeiten erzielen lassen, wenn eine Kombination der speziellen Tenside mit einem weiteren anionischen und/oder nicht-ionischen Co-Tensid eingesetzt wird.

Die vorliegende Erfindung bezieht sich auf ein Verfahren zum Passivieren einer metallischen Oberfläche, bei dem eine metallische Oberfläche mit einer wässrigen Zusammensetzung enthaltend (oder bestehend aus) folgende(n) Komponenten in Kontakt gebracht wird:
a) mindestens ein wasserlösliches, saure Gruppen umfassendes Polymer (X), wobei das Polymer (X) mindestens 0,6 mol Säuregruppen/100 g Polymer aufweist; insbesondere sind die sauren Gruppen ausgewählt aus Carboxylgruppen, Sulfonsäuregruppen, Phosphorsäuregruppen und/oder Phosphonsäuregruppen;
b) mindestens ein Tensid der allgemeinen Formel (T1) 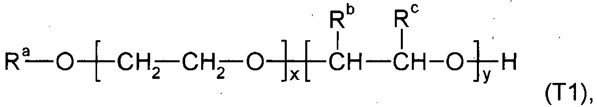 wobei
   - R^{a}: ein verzweigter oder linearer Alkylrest mit 8 bis 18, insbesondere mit 10 bis 14; insbesondere 10 bis 13 Kohlenstoffatomen ist,
   - x: eine ganze Zahl von 2 bis 12, bevorzugt von 5 bis 8, ist,
   - y: eine ganze Zahl von 1 bis 10, bevorzugt von 1 bis 4 ist,
   - R^{b}: Wasserstoff oder ein verzweigter oder linearer Alkylrest mit 1 bis 4 Kohlenstoffatomen ist, bevorzugt ist R^{b} ausgewählt aus Methyl oder Ethyl,
   - R^{c}: Wasserstoff oder ein verzweigter oder linearer Alkylrest mit 1 bis 4 Kohlenstoffatomen ist; bevorzugt ist R^{c} Wasserstoff,
   mit der Maßgabe, dass mindestens einer der Rest R^{b} oder R^{c} nicht Wasserstoff ist;
c) optional mindestens ein Co-Tensid (T2), insbesondere ausgewählt aus der Gruppe bestehend aus C₈₋₂₀-Alkylsulfaten, C₈₋₂₀-Alkylarylsulfaten, C₈₋₂₀-Alkylsulfonaten, C₈₋₂₀-Alkylarylsulfonaten und ethoxylierten Alkoholen umfassend einen linearen oder verzweigten, gesättigten oder ungesättigten C₈₋₂₀-Alkylrest und umfassend 2 bis 14, bevorzugt 4 bis 10, Ethylenoxid-Einheiten;
d) mindestens ein Lösemittel (L), enthaltend mindestens 80 Gew.-% Wasser;
e) optional mindestens eine weitere Komponente (K);
wobei der pH-Wert der Zusammensetzung im Bereich von 0,5 bis 5, insbesondere im Bereich 0,5 bis 2 liegt.

Insbesondere bezieht sich die vorliegende Erfindung auf ein Verfahren zum Passivieren einer metallischen Oberfläche wie oben beschrieben, dadurch gekennzeichnet, dass eine Zusammensetzung eingesetzt wird, enthaltend (bzw. bestehend aus):
a) 10 bis 40 Gew.-% mindestens eines wasserlöslichen, saure Gruppen umfassenden Polymers (X), wobei das Polymer (X) mindestens 0,6 mol Säuregruppen /100 g Polymer aufweist;
b) 0,1 bis 1 Gew.-% mindestens eines Tensids der allgemeinen Formel (T1) 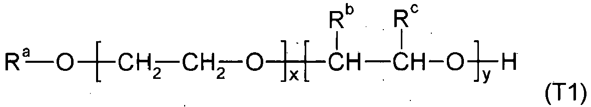 wobei
   - R^{a}: ein verzweigter oder linearer Alkylrest mit 8 bis 18, insbesondere mit 10 bis 14, insbesondere 10 bis 13 Kohlenstoffatomen ist,
   - x: eine ganze Zahl von 2 bis 12, bevorzugt von 5 bis 8, ist,
   - y: eine ganze Zahl von 1 bis 10, bevorzugt von 1 bis 4 ist,
   - R^{b}: Wasserstoff oder ein verzweigter oder linearer Alkylrest mit 1 bis 4 Kohlenstoffatomen ist, bevorzugt ist R^{b} ausgewählt aus Methyl und Ethyl,
   - R^{c}: Wasserstoff oder ein verzweigter oder linearer Alkylrest mit 1 bis 4 Kohlenstoffatomen ist; R^{c} ist bevorzugt Wasserstoff;
   mit der Maßgabe, dass mindestens einer der Rest R^{b} oder R^{c} nicht Wasserstoff ist;
c) 0 bis 2 Gew.-% mindestens eines Co-Tensids (T2), insbesondere ausgewählt aus der Gruppe bestehend aus C₈₋₂₀Alkylsulfaten, C₈₋₂₀Alkylarylsulfaten, C₈₋₂₀Alkylsulfonaten, C₈₋₂₀Alkylarylsulfonaten und ethoxylierten C₈₋₂₀ Alkoholen umfassend einen linearen oder verzweigten, gesättigten oder ungesättigten Alkylrest und umfassend 2 bis 14, bevorzugt 4 bis 10, Ethylenoxid-Einheiten;
d) 20 bis 89 Gew.-% mindestens eines Lösemittels (L), enthaltend mindestens 80 Gew.-% Wasser,
e) 0 bis 30 Gew.-% mindestens einer weiteren Komponente (K)

Die Erfindung betrifft auch die Formulierungen bzw. Zusammensetzungen selbst und deren Herstellung.

Zur Passivierung mittels des erfindungsgemäßen Verfahrens wird eine saure wässrige Formulierung eingesetzt, welche mindestens ein wasserlösliches, saure Gruppen umfassendes Polymer (X) umfasst. Bei den eingesetzten Polymeren (X) kann es sich um Homopolymere und/oder um Copolymere handeln. Es können auch Gemische mehrerer verschiedener Polymere eingesetzt werden.

Die erfindungsgemäß eingesetzte Formulierung umfasst vorzugsweise 10 bis 40 Gew.-%, bevorzugt 15 bis 35 Gew.-%, besonders bevorzugt 15 bis 30 Gew.-% und häufig 18 bis 25 Gew.-% des Polymers bzw. der Polymere (X), bezogen auf die Menge aller Komponenten der Formulierung (einschließlich der Lösemittel).

Unter dem Begriff "wasserlöslich" ist im Sinne dieser Erfindung zu verstehen, dass das oder die eingesetzten Polymere (X) homogen wasserlöslich sind und zwar in den für die Zusammensetzungen genannten Mengen. Bevorzugt sollten die eingesetzten Polymere (X) lückenlos (unbeschränkt) mit Wasser mischbar sein. Insbesondere sollten die eingesetzten Polymere eine Löslichkeit von mindestens 50 g/l, bevorzugt 100 g/l und besonders bevorzugt mindestens 200 g/l in Wasser bei Raumtemperatur und pH 7 aufweisen. Allerdings ist zu beachten, dass die Löslichkeit der beschriebenen, saure Gruppen umfassenden Polymere (X) in Wasser in der Regel auch vom pH-Wert abhängig ist. Ein Polymer, welches bei einem bestimmten pH-Wert eine nicht ausreichende Löslichkeit für den vorgesehenen Einsatzzweck hat, kann bei einem anderen pH-Wert eine noch ausreichende Löslichkeit aufweisen.

Erfindungsgemäß weisen die eingesetzten Polymere (X) mindestens 0,6 mol Säuregruppen/100 g des Polymers auf. Diese Mengenangaben beziehen sich insbesondere auf die freien Säuregruppen. Bevorzugt weisen die Polymere mindestens 0,9 mol Säuregruppen/100 g Polymer auf, besonders bevorzugt mindestens 1 mol Säuregruppen/100 g und häufig sogar mindestens 1,2 mol Säuregruppen/100g. In einer Ausführungsform der Erfindung sollten nicht mehr als 25 mol % der im Polymer X vorhanden Säuregruppen neutralisiert sein, bevorzugt nicht mehr als 20 mol % und besonders bevorzugt nicht mehr als 12 mol %.

Die sauren Gruppen der Polymere (X) sind in der Regel ausgewählt aus Carboxylgruppen, Sulfonsäure-Gruppen, Phosphorsäure-Gruppen und/oder Phosphonsäure-Gruppen. Bevorzugt sind die sauren Gruppen ausgewählt aus Carboxyl-Gruppen, Phosphorsäure-Gruppen und Phosphonsäure-Gruppen. Besonders bevorzugt handelt es sich bei dem eingesetzten Polymer (X) um ein Copolymer (X1) aufgebaut aus mindestens zwei verschiedenen, säuregruppenhaltigen Monomeren, insbesondere aus Monomeren enthaltend Carboxyl-Gruppen und aus Monomeren enthaltend Phosphonsäure-Gruppen.

Besonders bevorzugt werden zur Ausführung der Erfindung Homo- oder Copolymere eingesetzt, welche Acrylsäureeinheiten und/oder Methacrylsäureeinheiten umfassen.

Insbesondere handelt es sich bei dem Polymer (X) um ein oder mehrere wasserlösliche Copolymere (X1) aufgebaut aus Acrylsäure- und/oder Methacrylsäure-Monomereinheiten (M1) und davon verschiedenen monoethylenisch ungesättigten Monomeren mit sauren Gruppen (M2). Optional können weiterhin OH-Gruppen aufweisende Acrylsäureesters oder Methacrylsäureester (M3) enthalten sein. Optional können weitere Monomere (M4) als Baueinheiten vorhanden sein.

In einer bevorzugten Ausführungsform der Erfindung handelt es sich bei dem wasserlöslichen Polymeren (X) um ein Copolymer (X1), welches aus folgenden Monomeren aufgebaut ist (bzw. diese enthält):

| | |
|---|---|
| M1: 30 bis 90 Gew.-% | Methacrylsäure und/oder Acrylsäure; |
| M2: 10 bis 70 Gew.-% | mindestens eines weiteren von (M1) verschiedenen, monoethylenisch ungesättigten Monomers, welches eine oder mehrere saure Gruppen aufweist (insbesondere monoethylenisch ungesättigte Dicarbonsäuren mit 4 bis 7 Kohlenstoffatomen, monoethylenisch ungesättigten Phosphorsäuren, monoethylenisch ungesättigten Phosphonsäuren, bevorzugt monoethylenisch ungesättigten Phosphonsäuren) |
| optional M3: 0 bis 40 Gew.-% | mindestens eines OH-Gruppen aufweisenden Methacrylsäureesters und/oder Acrylsäureesters; |
| optional M4: 0 bis 30 Gew.-% | mindestens eines weiteren, von (M1), (M2) und (M3) verschiedenen ethylenisch ungesättigten Monomers. |

Diese Gew.-%-Angaben beziehen sich auf die Summe (100 Gew.-%) aller Monomere im Copolymer (X1).

Weiterhin können die in WO 2009/047209 beschriebenen bevorzugten Polymere (X), welche saure Gruppen umfassen, im Rahmen der vorliegenden Erfindung eingesetzt werden. Für die im erfindungsgemäßen Verfahren eingesetzten Polymere (X) können die in WO 2009/047209 beschriebenen Ausführungsformen hinsichtlich der Monomere (M1), (M2), (M3) und (M4) eingesetzt werden.

Die Menge an Acrylsäureeinheiten und/oder Methacrylsäureeinheiten (M1) im Copolymer (X1) beträgt 30 bis 90 Gew.-%, bevorzugt 40 bis 80 Gew.-% und besonders bevorzugt 50 bis 70 Gew.-%, wobei diese Angabe auf die Summe aller Monomere im Polymer bezogen ist.

Die Menge der Monomere (M2) im Copolymer (X1) beträgt 10 bis 70 Gew.-%, bevorzugt 20 bis 60 Gew.-%, und besonders bevorzugt 30 bis 50 Gew.-%, jeweils bezogen auf die Summe aller Monomere im Polymer.

Bei dem Monomer (M2) handelt es sich um mindestens ein von (M1) verschiedenes, aber mit (M1) copolymerisierbares, monoethylenisch ungesättigtes Monomer, welches eine oder mehrere saure Gruppen aufweist, wobei die sauren Gruppen ausgewählt sind aus Carboxyl-Gruppen, Phosphorsäure-Gruppen, Phosphonsäure-Gruppen oder Sulfonsäure-Gruppen. Es können mehrere verschiedene Monomere (M2) eingesetzt werden. Bezüglich der bevorzugten Ausführungsformen von Monomer (M2) wird auf das Dokument WO 2009/047209 verwiesen.

Beispiele derartiger Monomere (M2) umfassen Crotonsäure, Vinylessigsäure, C₁-C₄ Halbester monoethylenisch ungesättigter Dicarbonsäuren, Styrolsulfonsäure, Vinylsulfonsäure, Allylsulfonsäure, 2-Acrylamido-2-methyl-1-propansulfonsäure (AMPS), Vinylphosphonsäure, Phosphorsäuremonovinylester, Maleinsäure, Fumarsäure oder Itaconsäure. Bevorzugt wird Vinyl-phosphonsäure als Monomer (M2) eingesetzt.

Das Copolymer (X1) kann darüber hinaus optional mindestens einen OH-Gruppen aufweisenden Acrylsäureesters und/oder Methacrylsäureester als Monomer-Baustein (M3) enthalten. Bevorzugt handelt es sich um Monohydroxyacrylsäureester und/oder Monohydroxymethacrylsäureester. Bevorzugt wird Hydroxyethylacrylat als Monomer (M3) eingesetzt.

Die Menge der Monomere (M3) im Copolymer (X1) beträgt 0 bis 40 Gew.-%, bevorzugt 1 bis 40 Gew.-%, bevorzugt 1 bis 30 Gew.-%

Bezüglich der weiteren bevorzugten Ausführungsformen von Monomer (M3) wird auf das Dokument WO 2009/047209 verwiesen.

Neben den Monomeren (M1), (M2), sowie gegebenenfalls (M3) kann optional 0 bis 30 Gew.-% mindestens eines weiteren, von (M1), (M2) und (M3) verschiedenen, ethylenisch ungesättigten Monomers (M4) eingesetzt werden. Darüber hinaus werden vorzugsweise keine anderen Monomere eingesetzt.

Die Monomere (M4) können zur Feinsteuerung der Eigenschaften des Copolymers (X1) dienen. Es können auch mehrere verschiedene Monomere (M4) eingesetzt werden. Sie werden vom Fachmann je nach den gewünschten Eigenschaften des Copolymers ausgewählt mit der Maßgabe, dass sie mit den Monomeren (M1), (M2) und (M3) copolymerisierbar sein müssen. Bevorzugt handelt es sich um monoethylenisch ungesättigte Monomere. In besonderen Fällen können aber auch geringe Mengen von Monomeren mit mehreren polymerisierbaren Gruppen eingesetzt werden. Hierdurch kann das Copolymer in geringem Umfange vernetzt werden. Beispiele geeigneter Monomere (M4) umfassen insbesondere aliphatische Alkylester der (Meth)acrylsäure, wie Methyl(meth)acrylat, Ethyl(meth)acrylat, Butyl(meth)acrylat oder 2-Ethylhexyl (meth)acrylat. Weiterhin geeignet sind Vinyl- oder Allylether wie z.B. Methylvinylether, Ethylvinylether, Propylvinylether, 2-Ethylhexylvinylether, Vinylcyclohexylether, Vinyl-4-hydroxybutylether, Decylvinylether, 2-(Diethyl-amino)ethylvinylether, 2-(Di-n-butyl-amino)ethylvinylether oder Methyldiglykolvinylether bzw. die entsprechenden Allylverbindungen. Ebenfalls eingesetzt werden können Vinylester wie beispielsweise Vinylacetat oder Vinylpropionat. Es können auch basische CoMonomere, wie beispielsweise Acrylamid und alkylsubstituierte Acrylamide eingesetzt werden.

Beispiele für vernetzende Monomere umfassen Moleküle mit mehreren ethylenisch ungesättigten Gruppen, beispielsweise Di(meth)acrylate wie Ethylenglykoldi(meth)-acrylat oder Butandiol-1,4-di(meth)acrylat oder Poly(meth)acrylate wie Trimethylolpropantri(meth)acrylat oder auch Di(meth)acrylate von Oligo- oder Polyalkylenglykolen, wie Di-, Tri- oder Tetraethylenglykoldi(meth)acrylat. Weitere Beispiele umfassen Vinyl(meth)acrylat oder Butandioldivinylether.

Der Ausdruck "(Meth)acryl" wie er hier verwendet wird bezeichnet entweder eine Acrylgruppe oder eine Methacrylgruppe.

Die Menge aller eingesetzten Monomere (M4) zusammen beträgt 0 bis 30 Gew.-% bezogen auf die Gesamtmenge der eingesetzten Monomere. Bevorzugt beträgt die Menge 0 bis 20 Gew.-%, besonders bevorzugt 0 bis 10 % Gew.-%. Falls vernetzend wirkende Monomere (M4) anwesend sind, sollte deren Menge im Regelfalle 5 %, bevorzugt 2 Gew.-% (bezogen auf die Gesamtmenge aller für das Verfahren eingesetzten Monomere) nicht überschreiten. Sie kann beispielsweise 10 ppm bis 1 Gew.-% betragen.

Bezüglich der bevorzugten Ausführungsformen von Monomer (M4) wird auf das Dokument WO 2009/047209 verwiesen.

Eine bevorzugte Ausführungsform betrifft das oben beschriebene Verfahren, dadurch gekennzeichnet, dass es sich bei dem wasserlöslichen Polymeren (X) um ein Copolymer (X1) handelt, welches aus folgenden Monomeren aufgebaut ist (bzw. diese enthält):

| | |
|---|---|
| M1: 20 bis 60 Gew.-% | Acrylsäure; |
| M2: 20 bis 60 Gew.-% | Vinylphosphonsäure; |
| M3: 1 bis 40 Gew.-% | Hydroxyethylacrylat. |

Die Herstellung der Polymere (X) bzw. Copolymere (X1) kann nach dem Fachmann bekannten Verfahren erfolgen. Bevorzugt werden die Copolymere durch radikalische Polymerisation der genannten Komponenten (M1), (M2) und optional (M3) und/oder (M4) in wässriger Lösung hergestellt. Einzelheiten zur Durchführung einer radikalischen Polymerisation sind dem Fachmann bekannt. Herstellungsverfahren für die Copolymere (X1) sind beispielsweise in WO 2006/021308 oder in WO 2006/134116 beschrieben.

Die synthetisierten Copolymere (X1) können aus der wässrigen Lösung mittels üblicher, dem Fachmann bekannter Methoden isoliert werden, beispielsweise durch Eindampfen der Lösung, Sprühtrocknen, Gefriertrocknen oder Fällung. Bevorzugt werden die Copolymere (X1) nach der Polymerisation nicht aus der wässrigen Lösung isoliert, sondern die erhaltenen Lösungen der Copolymere werden (ggf. nach Zugabe weiterer Zusatzstoffe) als solche für das erfindungsgemäße Verfahren eingesetzt. Um eine solche direkte Weiterverwendung zu erleichtern, sollte die Menge des zur Polymerisation verwendeten wässrigen Lösemittels von Anfang an so bemessen werden, dass die Konzentration des Polymers im Lösemittel für die Anwendung geeignet ist. Es kann auch zunächst ein Konzentrat hergestellt werden, welches erst vor Ort mit Wasser oder optional anderen Lösemitteln auf die gewünschte Konzentration verdünnt wird.

Das Molekulargewicht, insbesondere bezogen auf das gewichtsmittlere Molekulargewicht M_{w}, der für das erfindungsgemäße Verfahren eingesetzten Polymere (X) bzw. Copolymere (X1) wird vom Fachmann je nach der gewünschten Anwendung festgelegt. Eingesetzt werden können beispielsweise Polymere mit einem Molekulargewicht M_{w} von 3.000 bis 1.000.000 g/mol. Bewährt haben sich insbesondere Polymere mit 5.000 g/mol bis 500.000 g/mol, bevorzugt 10.000 g/mol bis 250.000 g/mol, besonders bevorzugt 15.000 bis 100.000 g/mol und ganz besonders bevorzugt 20.000 bis 75.000 g/mol.

Die Tensid-Komponente (T1) ist in der im erfindungsgemäßen Verfahren eingesetzten wässrigen Zusammensetzung in der Regel in einer Menge von 0,1 bis 1 Gew.-%, bevorzugt 0,2 bis 0,5 Gew.-%, insbesondere 0,1 bis 0,4 Gew.-% enthalten.

Die oben beschriebene wässrige Zusammensetzung enthält insbesondere mindestens ein Tensid der allgemeinen Formel (T1), 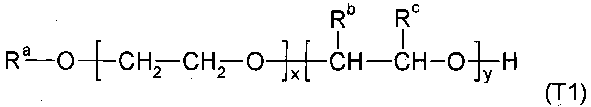 wobei
- R^{a}: ein verzweigter oder linearer Alkylrest mit 8 bis 18, insbesondere 10 bis 13 Kohlenstoffatomen ist,
- x: eine ganze Zahl von 2 bis 12, bevorzugt von 5 bis 8, ist,
- y: eine ganze Zahl von 1 bis 10, bevorzugt von 1 bis 4 ist,
- R^{b}: Wasserstoff oder ein verzweigter oder linearer Alkylrest mit 1 bis 4 Kohlenstoffatomen ist, bevorzugt ist R^{b} ausgewählt aus Methyl oder Ethyl,
- R^{c}: Wasserstoff oder ein verzweigter oder linearer Alkylrest mit 1 bis 4 Kohlenstoffatomen ist; bevorzugt ist R^{c} Wasserstoff.
mit der Maßgabe, dass mindestens einer der Rest R^{b} oder R^{c} nicht Wasserstoff ist.

In einer bevorzugten Ausführungsform handelt es sich bei R^{a} um einen verzweigten Alkylrest. Insbesondere kann es sich bei R^{a} um einen Iso-Alkylrest, mit 8 bis 18, insbesondere 10 bis 13 Kohlenstoffatomen umfassend mindestens eine Gruppe (CH₃)₂-CH-handeln.

In einer bevorzugten Ausführungsform der Erfindung wird in dem beschriebenen erfindungsgemäßen Verfahren ein Tensid der oben angegebenen allgemeinen Formel (T1) eingesetzt, wobei
- R^{a}: ein verzweigter oder linearer Alkylrest mit 10 bis 14 Kohlenstoffatomen ist,
- x: eine ganze Zahl von 5 bis 8 ist,
- y: eine ganze Zahl von 1 bis 4 ist,
- R^{b}: ausgewählt aus Methyl und Ethyl ist, bevorzugt ist R^{b} Methyl,
- R^{c}: Wasserstoff ist.

In einer weiteren bevorzugten Ausführungsform der Erfindung wird in dem beschriebenen erfindungsgemäßen Verfahren ein Tensid der der allgemeinen Formel (T1) eingesetzt, 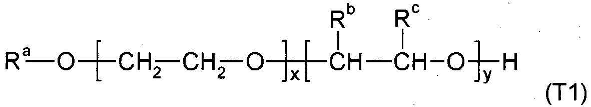 wobei
- R^{a}: ein Iso-alkylrest mit 10 bis 14 Kohlenstoffatomen ist,
- x: eine ganze Zahl von 5 bis 8 ist,
- y: eine ganze Zahl von 1 bis 4 ist,
- R^{b}: Methyl ist,
- R^{c}: Wasserstoff ist.

Die erfindungsgemäß eingesetzten Tenside weisen in der Regel eine Blockstruktur auf, wobei die Ethylenoxid-Einheiten und die Alkylenoxid-Einheiten in der in Formel (T1) angegebenen Weise angeordnet sind.

Die erfindungsgemäß eingesetzten Tenside (T1) können ausgehend von den entsprechenden Alkoholen durch Umsetzung mit Ethylenoxid und anschließender Umsetzung mit mindestens einem Alkylenoxid der folgenden allgemeinen Formel (I) erhalten werden 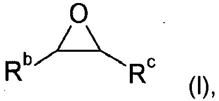 wobei
- R^{b}: ein verzweigter oder linearer Alkylrest mit 1 bis 4 Kohlenstoffatomen ist, bevorzugt ist R^{b} ausgewählt aus Methyl oder Ethyl,
- R^{c}: Wasserstoff oder ein verzweigter oder linearer Alkylrest mit 1 bis 4 Kohlenstoffatomen ist; bevorzugt ist R^{c} Wasserstoff.

Bevorzugt wird als Alkylenoxid der allgemeinen Formel (I) Propylenoxid eingesetzt. Die angegebenen allgemeinen Strukturen des Tensids (T1) sollen alle möglichen Formen der Verknüpfung, wie sie dem Fachmann bekannt sind, einschließen. Dem Fachmann sind weiterhin geeignete Verfahren und Katalysatoren zur Herstellung von alkoxylierten Alkoholen bekannt.

### Co-Tensid (T2)

Durch Zugabe eines anionischen oder nicht-ionischen Co-Tensids (T2) kann insbesondere die Lagerbeständigkeit und Transparenz der Polymerlösung erhöht werden. Das Co-Tensid (T2) kann insbesondere dazu dienen, die Löslichkeit des Tensides (T1) zu verbessern.

Die im oben beschriebenen Verfahren eingesetzte wässrige Zusammensetzung kann optional mindestens ein Co-Tensid (T2) eingesetzt enthalten, insbesondere ausgewählt aus der Gruppe bestehend aus C₈₋₂₀-Alkylsulfaten, C₈₋₂₀-Alkylarylsulfaten, C₈₋₂₀-Alkylsulfonaten, C₈₋₂₀-Alkylarylsulfonaten und ethoxylierten Alkoholen umfassend einen linearen oder verzweigten, gesättigten oder ungesättigten C₈₋₂₀-Alkylrest und umfassend 2 bis 14, bevorzugt 4 bis 10, Ethylenoxid-Einheiten. Es können ebenfalls alkoxylierte, insbesondere ethoxylierte, Derivate der oben genannten anionischen Tenside als Co-Tensid (T2) im erfindungsgemäßen Verfahren eingesetzt werden.

Bevorzugt wird mindestens ein Co-Tensid (T2) ausgewählt aus der Gruppe bestehend aus Cumolsulfat, 2-Ethylhexylsulfat, C₈₋₂₀-Alkylbenzolsulfonaten, ethoxylierten Alkoholen umfassend einen linearen oder verzweigten, gesättigten oder ungesättigten C₈₋₂₀-Alkylrest und umfassend 2 bis 14, bevorzugt 4 bis 10, Ethylenoxid-Einheiten.

Das Co-Tensid (T2) kann insbesondere im Bereich von 0 bis 2 Gew.-%, bevorzugt von 0 bis 1 Gew.-% in der wässrigen Zusammensetzung enthalten sein.

In einer bevorzugten Ausführungsform bezieht sich die Erfindung auf ein Verfahren wie oben beschrieben, dadurch gekennzeichnet, dass die eingesetzte Zusammensetzung 0,1 bis 2 Gew.-%, bevorzugt 0,1 bis 1 Gew.-%, insbesondere bevorzugt 0,1 bis 0,8 Gew.-% mindestens eines Co-Tensides (T2) enthält ausgewählt aus der Gruppe bestehend aus C₈₋₂₀-Alkylsulfaten, C₈₋₂₀-Alkylarylsulfaten, C₈₋₂₀-Alkylsulfonaten, C₈₋₂₀-Alkylarylsulfonaten und ethoxylierten Alkoholen umfassend einen linearen oder verzweigten, gesättigten oder ungesättigten C₈₋₂₀-Alkylrest und umfassend 2 bis 14, bevorzugt 4 bis 10, Ethylenoxid-Einheiten. Insbesondere ist das Co-Tensid (T2) in der gleichen bis doppelten Menge wie Tensid (T1) enthalten (d.h. in einem Verhältnis von T2:T1 von 1:1 bis 2:1).

Als Lösemittel (L) wird in den Zusammensetzungen bevorzugt ausschließlich Wasser eingesetzt. Das Lösemittel kann neben Wasser mit Wasser mischbare, organische Lösemittel in geringen Mengen umfassen. Insbesondere können geringe Mengen an organischen Lösemitteln eingesetzt werden, ausgewählt aus Monoalkoholen wie Methanol, Ethanol oder Propanol, höheren Alkoholen wie Ethylenglykol oder Polyetherpolyole, Etheralkoholen wie Butylglykol oder Methoxypropanol und N-Methylpyrrolidon. Im Regelfalle beträgt die Menge des Wassers mindestens 80 Gew.-% (bezogen auf die Gesamtmenge an Lösemittel), bevorzugt mindestens 90 Gew.-% (bezogen auf die Gesamtmenge an Lösemittel) und häufig mindestens 95 Gew.-% (bezogen auf die Gesamtmenge an Lösemittel).

Das Lösemittel ist bevorzugt in einer Menge von 20 bis 89 Gew.-% in der oben beschriebenen wässrigen Zusammensetzung enthalten, bevorzugt von 20 bis 80 Gew.-%, bevorzugt von 20 bis 70 Gew.-%, bevorzugt von 20 bis 60 Gew.-%, bevorzugt von 20 bis 50 Gew.-% (bezogen auf die gesamte wässrige Zusammensetzung).

Als weitere Komponenten (K) kann die oben beschriebene wässrige Zusammensetzung mindestens eine der folgenden Komponenten enthalten:
a. Phosphationen-haltige Komponenten, insbesondere in einer Menge von 0 bis 10 Gew.-%, bevorzugt von 0,1 bis 5 Gew.-%;
b. anorganische und organische Säuren (z.B. Phosphorsäure, Salpetersäure, Methansulfonsäure Ameisensäure, Essigsäure), insbesondere in einer Menge von 0 bis 10 Gew.-%;
c. Verbindungen mehrwertiger Metallionen (z.B. Zn²⁺, Mn²⁺, Ca²⁺, Al³⁺, Mg²⁺-Verbindungen), insbesondere in einer Menge von 0 bis 10 Gew.-%, bevorzugt 0,01 bis 2 %;
d. Solubilisatoren (anionisch, nichtionisch, kationisch), insbesondere in einer Menge von 0 bis 1 Gew.-%;
e. organische Vernetzer; z.B. Polyamine; auch in ihrer protonierten Form; insbesondere in einer Menge von 0 bis 10 Gew.-%;
f. Entschäumer (z.B. Silane, modifizierte Silane), insbesondere in einer Menge von 0,001 bis 0,1 Gew.-%;
g. Entlüfter (z.B. langkettige Alkohole), insbesondere in einer Menge von 0,001 bis 0,1 Gew.-%;
h. Aktivatoren (z.B. Nitrat, Nitrobenzolsulfonat), insbesondere in einer Menge von 0 bis 2 Gew.-%, bevorzugt von 0 bis 0,5 Gew.-%;
i. Wasserstofffänger (z.B. Hydroxylammoniumsalze, Wasserstoffperoxid (H₂O₂), Nitrat), insbesondere in einer Menge von 0 bis 2 Gew.-%, bevorzugt von 0 bis 0,5 Gew.-%;
j. Co-Solventien (z.B. 2-Ethylhexylethoxylat, Butyldiglykol, Propyldiglykol), insbesondere in einer Menge von 0 bis 5 Gew.-%, bevorzugt von 0,1 bis 2 Gew.-%;
k. Korrosionsschutzadditive (z.B. stickstoffhaltige Heterozyklen, Phosphorsäureester, organische Mono-, Di- und Tricarbonsäuren), insbesondere in einer Menge von 0,01 bis 5 Gew.-%, bevorzugt von 0,1 bis 2 Gew.-%;
l. Komplexbildner (z.B. Aminoessigsäurederivate, Phosphonsäurederivate), insbesondere in einer Menge von 0,01 bis 5 Gew.-%, bevorzugt von 0,1 bis 1 Gew.-%.

Die Menge an zusätzlichen Komponenten (K) sollte in der Summe nicht mehr als 30 Gew.-%, insbesondere nicht mehr als 20 Gew.-%, bevorzugt nicht mehr als 10 Gew.-% und insbesondere bevorzugt nicht mehr als 5 Gew.-% (jeweils bezogen auf die Gesamt-Zusammensetzung) betragen.

Die im erfindungsgemäßen Verfahren eingesetzte wässrige Zusammensetzung weist in der Regel einen pH-Wert von kleiner 5 auf, insbesondere einen pH-Wert von 0,5 bis 5, bevorzugt 0,5 bis 2,0. Der pH-Wert der Zubereitung hängt von der Art und Konzentration der verwendeten Polymere (X) ab. Er kann jedoch durch Zugabe weiterer basischer oder saurer Komponenten in die Formulierung beeinflusst werden. So kann die eingesetzte Formulierung neben den sauren Polymeren noch anorganische oder organische Säuren oder Mischungen davon enthalten. Die Auswahl derartiger Säure ist nicht begrenzt, vorausgesetzt, es treten keine negativen Effekte zusammen mit den anderen Komponenten der wässrigen Zusammensetzung auf.

Beispiele geeigneter Säuren umfassen Phosphorsäure, Phosphonsäure oder organische Phosphonsäuren wie 1-Hydroxyethan-1,1-diphosphonsäure (HEDP), 2-Phosphonobutan-1 ,2,4-tricarbonsäure (PBTC), Aminotri(methylenphosphonsäure) (ATMP), Ethylendiamintetra(methylenphosphonsäure) (EDTMP) oder Diethylentriaminpenta(methylenphosphonsäure) (DTPMP), Sulfonsäuren wie Methansulfonsäure, Amidosulfonsäure, p-Toluolsulfonsäure, m-Nitrobenzolsulfonsäure und Derivate davon, Salpetersäure, Ameisensäure oder Essigsäure. Bevorzugt sind phosphorhaltige Säuren wie Phosphorsäure (H₃PO₄), Phosphonsäure (H₃PO₃), die genannten organischen Phosphonsäuren, Salpetersäure (HNO₃) oder Methansulfonsäure. Bevorzugt kann es sich um Phosphorsäure (H₃PO₄) oder eine andere phosphorhaltige Säure handeln.

Die Acidität der eingesetzten wässrigen Zusammensetzungen kann auch im Wesentlichen durch die sauren Gruppen des Polymers (X) hervorgerufen werden.
Die Menge an zusätzlichen Säuren neben den Polymeren (X) in der wässrigen Zusammensetzung überschreitet daher insbesondere 30 Gew.-% (bezüglich der Menge aller Komponenten in der Zusammensetzung) nicht. Bevorzugt sollten 25 Gew.-%, besonders bevorzugt 20 Gew.-% und ganz besonders bevorzugt 10 Gew.-% nicht überschritten werden. In einer zweiten, besonders bevorzugten Ausführungsform der Erfindung sind keine zusätzlichen Säuren vorhanden. Die Säuregruppen des Polymers (X) liegen bevorzugt als freie Säuregruppen vor.

In einer bevorzugten Ausführungsform der Erfindung kann die eingesetzte wässrige Zusammensetzung als zusätzliche Komponente mindestens eine Art von mehrwertigen Metallionen ausgewählt aus der Gruppe bestehend aus Zn²⁺, Mg²⁺, Ca²⁺, Mn²⁺ und Al³⁺ enthalten. Bevorzugt handelt es sich um Zn²⁺ und/oder Mg²⁺, besonders bevorzugt um Zn²⁺. Bevorzugt umfasst die Zusammensetzung keine weiteren Metallionen. Insbesondere können die Ionen Komplexbindungen zu den sauren Gruppen des Polymers aufweisen. Falls vorhanden, beträgt die Menge an Zusätzen von Verbindungen mit mehrwertigen Metallionen (ausgewählt aus der Gruppe bestehend aus Zn²⁺, Mg²⁺, Ca²⁺, Mn²⁺ und Al³⁺) 0 bis 10 Gew.-%, bevorzugt 0,01 bis 2 %.

Falls Metallionen oder Metallverbindungen anwesend sind, handelt es sich bevorzugt um Zusammensetzungen, welche keine Chromverbindungen enthalten. Weiterhin sollten bevorzugt keine Metallfluoride bzw. komplexen Metallfluoride anwesend sein. Die erfindungsgemäße Passivierung ist also bevorzugt eine chromfreie Passivierung, besonders bevorzugt eine Chrom- und Fluorid-freie Passivierung.

Die erfindungsgemäß einzusetzenden wässrigen Zusammensetzungen können durch Mischen der oben beschriebenen Komponenten erhalten werden.

Als zu behandelnde Metalloberfläche ist im Allgemeinen jede beliebige Metalloberfläche einsetzbar, es handelt sich insbesondere um Oberflächen aus unedlen Metallen. Es kann sich beispielsweise um Oberflächen enthaltend bzw. bestehend im Wesentlichen aus Eisen, Eisenlegierungen, Stahl, Zn, Zn-Legierungen, Al oder Al-Legierungen, Sn und Sn-Legierungen, Mg oder Mg Legierungen handeln. Bei den Stählen kann es sich sowohl um niedrig legierte wie um hochlegierte Stähle handeln. Häufig handelt es sich bei der Metalloberfläche um Aluminium oder Aluminium-Legierungen bzw. um Zink oder Zinklegierungen, wobei eine Oberfläche aus Zink oder Zink-Legierungen im Allgemeinen durch einen Verzinkungsvorgang eines metallischen Werkstoffs wie Eisen oder Stahl erhalten wird.

Das erfindungsgemäße Verfahren eignet sich insbesondere zum Passivieren von metallischen Oberflächen aus Zn, Zn-Legierungen, Al oder AI-Legierungen. Es kann sich dabei um die Oberflächen von vollständig aus den besagten Metallen bzw. Legierungen bestehenden Körpern beziehungsweise Werkstücken handeln. Es kann sich aber auch um die Oberflächen von mit Zn, Zn-Legierungen, Al oder Al-Legierungen beschichteten Körpern handeln, wobei die Körper aus anderen Materialien, beispielsweise aus anderen Metallen, Legierungen, Polymeren oder Verbundwerkstoffen bestehen können. Insbesondere kann es sich um die Oberfläche von verzinktem Eisen oder Stahl handeln. Der Begriff "verzinkt" umfasst auch das Beschichten mit einer ZinkLegierung, insbesondere die Feuerverzinkung mit Zn-Al-Legierungen und die elektrolytische Verzinkung mit Zn-Ni, Zn-Fe, Zn/Mn- und Zn/Co-Legierungen.

Bevorzugt betrifft die vorliegende Erfindung ein Verfahren zum Passivieren einer metallischen Oberfläche, dadurch gekennzeichnet, dass es sich bei der metallischen Oberfläche um Oberflächen bestehend im Wesentlichen aus einem oder mehreren Metallen ausgewählt aus der Gruppe bestehend aus Zink (Zn), Aluminium (Al) und Magnesium (Mg) handelt.

Zn- oder AI-Legierungen sind dem Fachmann bekannt. Je nach dem gewünschten Anwendungszweck wählt der Fachmann Art und Menge von Legierungsbestandteilen aus. Typische weitere Bestandteile von Zink-Legierungen umfassen insbesondere Al, Mg, Pb, Si, Mg, Sn, Cu und Cd. Es kann sich auch um Al/Zn-Legierungen handeln, bei denen Al und Zn in annähernd gleicher Menge vorhanden sind. Bei den Beschichtungen kann es sich um weitgehend homogene Beschichtungen oder auch um Konzentrationsgradienten aufweisende Beschichtungen handeln. Beispielsweise kann es sich um verzinkten Stahl handeln, der zusätzlich mit Mg bedampft wurde. Hierdurch kann oberflächlich eine Zn/Mg-Legierung entstehen. Typische weitere Bestandteile von Aluminium-Legierungen sind insbesondere Mg, Mn, Si, Zn, Cr, Zr, Cu und Ti.

In einer bevorzugten Ausführungsform des Verfahrens handelt es sich um die Oberfläche eines Bandmetalls, bevorzugt aus Aluminium oder einer Aluminium-Legierung oder aus Eisen bzw. Stahl, insbesondere Bänder aus elektrolytisch verzinktem oder heissverzinktem Stahl.

Oftmals handelt es sich um die Oberfläche von Formkörpern, welche durch Verarbeitungsvorgänge wie Trennen, Umformen und/oder Fügen aus den genannten Bandmetallen erhältlich sind. Beispiele sind Automobilkarosserien oder Teile davon, LKW-Aufbauten, Verkleidungen für Haushaltgeräte (wie beispielsweise Waschmaschinen, Geschirrspülmaschinen, Wäschetrockner, Gas und Elektroherde, Mikrowellengeräte, Tiefkühltruhen oder Kühlschränke), Verkleidungen für technische Geräte oder Einrichtungen (wie beispielsweise Maschinen, Schaltschränke, Computergehäuse oder dergleichen), Bauelemente im Architekturbereich (wie Wandteile, Fassadenelemente, Deckenelemente, Fenster oder Türprofile oder Trennwände), Möbel aus metallischen Materialien (wie Metallschränke oder Metallregale).

Die zu behandelnden metallischen Oberflächen können auch dünne oxidische, hydroxidische und/oder carbonatische Oberflächenschichten oder Schichten ähnlichen Aufbaues aufweisen. Derartige Schichten bilden sich auf metallischen Oberflächen im Kontakt mit der Atmosphäre üblicherweise von alleine, und sind im Begriff "metallische Oberfläche" mit eingeschlossen.

In einer bevorzugten Ausführungsform betrifft das Verfahren ein kontinuierliches Verfahren zur Passivierung von verzinkten Stahlbändern in einer Bandbeschichtungsanlage im Anschluss an die Verzinkung (z.B. elektrolytische Verzinkung oder Feuerverzinkung).

Mit dem erfindungsgemäßen Verfahren können einseitig oder beidseitig verzinkte Stahlbänder passiviert werden. Verzinkte Stahlbänder weisen eine Dicke von 0,2 bis 0,3 mm und Breiten von 0,5 bis 2,5 m auf. Verzinkte Stahlbänder sind für verschiedene Anwendungen kommerziell erhältlich. Der Fachmann wählt je nach dem gewünschten Verwendungszweck ein geeignetes Stahlband aus.

Generell können zur Ausführung des erfindungsgemäßen Verfahrens die bekannten Bandbeschichtungsanlagen beruhend z.B. auf Abquetschwalzen-Technologie oder auf der Roll-Coater-Technologie, verwendet werden. Geeignete Anlagen werden beispielsweise in WO 2009/047209 beschrieben.

Das erfindungsgemäße Verfahren zur Passivierung von verzinkten Stahlbändern wird bevorzugt mittels eines kontinuierlichen Verfahrens unter Verwendung von AbquetschWalzen vorgenommen. Hierzu wird das verzinkte Stahlband mittels Antriebsrollen bewegt. Die Passivierungs-Zusammensetzung wird z.B. mittels einer Sprühstation auf das Stahlband aufgesprüht und bildet einen feuchten Film. Mittels einer oder mehrerer Abquetschwalzen wird überschüssige Passivierungs-Zusammensetzung abgequetscht. Es entsteht ein dünner, feuchter Film, der anschließend in einem Trockner getrocknet werden kann.

Die Stahlbänder können typischerweise mit einer Geschwindigkeit von 80 bis 200 m/min, bevorzugt 50 bis 150 m/min durch die Anlage gefahren werden. Die Behandlungsdauer kann vom Fachmann je nach den gewünschten Eigenschaften der Passivierungsschicht und andere Faktoren festgelegt werden. Bei kontinuierlichen Verfahren ist es vorteilhaft, dass die maximale Zeitspanne zwischen Aufbringen der wässrigen Zusammensetzung auf die metallische Oberfläche des Stahlbandes und der Trocknung des Films 1 bis 60 s beträgt.

In dem oben beschriebenen erfindungsgemäßen Verfahren kann die metallische Oberfläche mit der wässrigen Zusammensetzung, insbesondere durch Sprühen, Tauchen oder Aufwalzen in Kontakt gebracht werden.

In einer bevorzugten Ausführungsform umfasst das oben beschriebene Verfahren zur Passivierung einer metallischen Oberfläche die folgenden Schritte
i) gegebenenfalls Reinigung der metallischen Oberfläche zur Entfernung von Ölen, Fetten, Schmutz und/oder Oxidfilmen;
ii) gegebenenfalls Waschen der metallischen Oberfläche mit Wasser;
iii) in Kontakt Bringen einer metallischen Oberfläche mit einer oben beschriebenen wässrigen Zusammensetzung; wobei die wässrige Zusammensetzung in Form eines Nassfilm auf die Oberfläche aufgebracht wird;
iv) Trocknen des in Schritt iii) erhaltenen Nassfilms, bevorzugt bei Temperaturen im Bereich von 20 bis 250 °C, insbesondere von 50 bis 250 °C;
v) gegebenenfalls Nachbehandlung der passivierten Oberfläche.

In einer bevorzugten Ausführungsform bezieht sich die Erfindung auf ein oben beschriebenen Verfahren, dadurch gekennzeichnet, dass die wässrige Zusammensetzung auf die metallische Oberfläche in Form eines Nassfilms aufgebracht wird, wobei die wässrige Zusammensetzung in einem Auftragsgewicht im Bereich von 0,3 bis 2 g/m², bevorzugt 0,3 bis 1 g/m², insbesondere 0,4 bis 0,8 g/m² (bezogen auf die Summe der Feststoffe der wässrigen Zusammensetzung) auf die metallische Oberfläche aufgebracht wird.

Die mit dem beschriebenen erfindungsgemäßen Verfahren erhältlichen Passivierungsschichten weisen bevorzugt eine Schichtdicke im Bereich von 1 bis 3 µm, bevorzugt 1 bis 2 µm und ein Auftragsgewicht im Bereich von 0,3 bis 2 g/m², bevorzugt 0,3 bis 1 g/m², insbesondere bevorzugt 0,4 bis 0,8 g/m² (bezogen auf die Summe der Feststoffe der wässrigen Zusammensetzung) auf.

In einem weiteren Aspekt bezieht sich die vorliegende Erfindung auf eine Zusammensetzung zum Passivieren einer metallischen Oberfläche enthaltend

| | |
|---|---|
| a) 10 bis 40 Gew.-% | mindestens eines wasserlöslichen, saure Gruppen umfassenden Polymers (X), wobei das Polymer (X) mindestens 0,6 mol Säuregruppen/100 g des Polymeres aufweist; und wobei bevorzugt als saure Gruppen Carboxyl-Gruppen und Phosphonsäure-Gruppen enthalten sind; |
| b) 0,1 bis 1 Gew.-% | mindestens eines Tensids der allgemeinen Formel (T1), |
| 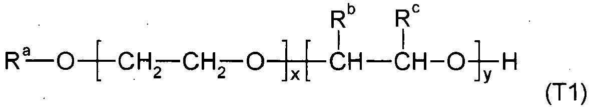 | |
| | wobei |
| | R^{a} ein verzweigter oder linearer Alkylrest mit 8 bis 18, insbesondere mit 10 bis 14; insbesondere 10 bis 13 Kohlenstoffatomen ist, |
| | x eine ganze Zahl von 2 bis 12, bevorzugt von 5 bis 8, ist, |
| | y eine ganze Zahl von 1 bis 10, bevorzugt von 1 bis 4 ist, |
| | R^{b} Wasserstoff oder ein verzweigter oder linearer Alkylrest mit 1 bis 4 Kohlenstoffatomen ist, bevorzugt ist R^{b} ausgewählt aus Methyl oder Ethyl, |
| | R^{c} Wasserstoff oder ein verzweigter oder linearer Alkylrest mit 1 bis 4 Kohlenstoffatomen ist; bevorzugt ist R^{c} Wasserstoff, |
| | mit der Maßgabe, dass mindestens einer der Rest R^{b} oder R^{c} nicht Wasserstoff ist; |
| c) 0 bis 2 Gew.-%, | insbesondere 0,1 bis 2 Gew.-% mindestens eines Co-Tensids (T2), insbesondere ausgewählt aus der Gruppe bestehend aus bestehend aus C₈₋₂₀-Alkylsulfaten, C₈₋₂₀-Alkylarylsulfaten, C₈₋₂₀-Alkylsulfonaten, C₈₋₂₀-Alkylarylsulfonaten und ethoxylierten Alkoholen umfassend einen linearen oder verzweigten, gesättigten oder ungesättigten C₈₋₂₀-Alkylrest und umfassend 2 bis 14, bevorzugt 4 bis 10, Ethylenoxid-Einheiten; |
| d) 20 bis 89 Gew.-% | mindestens eines Lösemittels (L), enthaltend mindestens 80 Gew.-% Wasser; |
| e) 0 bis 30 Gew.-% | mindestens einer weiteren Komponente (K). |

Bevorzugt enthält die erfindungsgemäße Zusammensetzung 0,1 bis 2 Gew.-% bevorzugt 0,1 bis 1 Gew.-%, insbesondere bevorzugt 0,1 bis 0,8 Gew.-% mindestens eines Co-Tensides (T2) ausgewählt aus der Gruppe bestehend aus C₈₋₂₀-Alkylsulfaten, C₈₋₂₀-Alkylarylsulfaten, C₈₋₂₀-Alkylsulfonaten, C₈₋₂₀-Alkylarylsulfonaten und ethoxylierten Alkoholen umfassend einen linearen oder verzweigten, gesättigten oder ungesättigten C₈₋₂₀-Alkylrest und umfassend 2 bis 14, bevorzugt 4 bis 10, Ethylenoxid-Einheiten.

Darüber hinaus gelten für die Komponenten (Polymer (X), Tensid (T1), Co-Tensid (T2), Lösemittel (L), weitere Komponenten (K)) die weiter oben im Zusammenhang mit dem erfindungsgemäßen Verfahren genannten bevorzugten Ausführungsformen.

Die vorliegende Erfindung ist weiterhin gerichtet auf die Verwendung der oben beschriebenen Zusammensetzung zur Passivierung einer metallischen Oberfläche, insbesondere einer metallischen Oberfläche bestehend im Wesentlichen aus einem oder mehreren Metallen ausgewählt aus der Gruppe bestehend aus Zink (Zn), Aluminium (Al) und Magnesium (Mg), insbesondere aus verzinkter Stahl. Insbesondere betrifft die Erfindung die Verwendung der oben beschriebenen Zusammensetzung zur Passivierung eines verzinkten Stahlbandes in einem kontinuierlichen Verfahren.

Ein weiterer Gegenstand der vorliegenden Erfindung ist eine Beschichtung auf einer metallischen Oberfläche erhältlich durch in Kontakt Bringen der metallischen Oberfläche mit einer wässrigen Zusammensetzung enthaltend die folgenden Komponenten:
a) mindestens ein wasserlösliches, saure Gruppen umfassendes Polymer (X), wobei das Polymer (X) mindestens 0,6 mol Säuregruppen/100 g Polymer aufweist; insbesondere sind die sauren Gruppen ausgewählt aus Carboxylgruppen, Sulfonsäuregruppen, Phosphorsäuregruppen und/oder Phosphonsäuregruppen;
b) mindestens ein Tensid der allgemeinen Formel (T1) 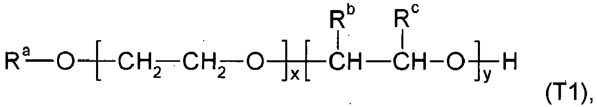 wobei
   - R^{a}: ein verzweigter oder linearer Alkylrest mit 8 bis 18, insbesondere mit 10 bis 14; insbesondere 10 bis 13 Kohlenstoffatomen ist,
   - x: eine ganze Zahl von 2 bis 12, bevorzugt von 5 bis 8, ist,
   - y: eine ganze Zahl von 1 bis 10, bevorzugt von 1 bis 4 ist,
   - R^{b}: Wasserstoff oder ein verzweigter oder linearer Alkylrest mit 1 bis 4 Kohlenstoffatomen ist, bevorzugt ist R^{b} ausgewählt aus Methyl oder Ethyl,
   - R^{c}: Wasserstoff oder ein verzweigter oder linearer Alkylrest mit 1 bis 4 Kohlenstoffatomen ist; bevorzugt ist R^{c} Wasserstoff,
   mit der Maßgabe, dass mindestens einer der Rest R^{b} oder R^{c} nicht Wasserstoff ist;
c) optional mindestens ein Co-Tensid (T2), insbesondere ausgewählt aus der Gruppe bestehend aus C₈₋₂₀-Alkylsulfaten, C₈₋₂₀-Alkylarylsulfaten, C₈₋₂₀-Alkylsulfonaten, C₈₋₂₀-Alkylarylsulfonaten und ethoxylierten Alkoholen umfassend einen linearen oder verzweigten, gesättigten oder ungesättigten C₈₋₂₀-Alkylrest und umfassend 2 bis 14, bevorzugt 4 bis 10, Ethylenoxid-Einheiten;
d) mindestens ein Lösemittel (L), enthaltend mindestens 80 Gew.-% Wasser;
e) optional mindestens eine weitere Komponente (K);
   wobei der pH-Wert der Zusammensetzung im Bereich von 0,5 bis 5, insbesondere im Bereich 0,5 bis 2 liegt.

Für die genannten Komponenten (Polymer (X), Tensid (T1), Co-Tensid (T2), Lösemittel (L), weitere Komponenten (K)) gelten die weiter oben im Zusammenhang mit dem erfindungsgemäßen Verfahren genannten bevorzugten Ausführungsformen.

Insbesondere ist die Erfindung gerichtet auf eine oben beschriebene Beschichtung, dadurch gekennzeichnet, dass die Beschichtung zusätzlich eine oder mehrere Lackschichten aufweist.

Die vorliegende Erfindung wird anhand der folgenden experimentellen Beispiele näher erläutert.

### Beispiel 1:

Es wurden jeweils wässrige Lösungen eines säuregruppenhaltigen Polymers (Polymer X) aus ca. 50 % Acrylsäure (Monomer M1), ,ca. 30 % Vinylphosphonsäure (Monomer M2), ca. 20 Gew.-% Hydroxyethylacrylat (Monomer M3), das wie in WO 2008/612248 beschrieben hergestellt wurde, verwendet. Es wurden Ausgangs-Formulierungen aus ca. 20 Gew.-% des säuregruppenhaltigen Polymers (Polymer (X)), 85%ig Phosphorsäure (H₃PO₄), Zinkoxid (ZnO), Methansulfonsäure (MSA), Natriummetanitrobenzolsulfonat (MBS) durch ggf. Lösen der Komponenten in Wasser und Vermischen der Komponenten hergestellt. Die genauen Mengen (Angabe in Gew.-%) der Komponenten der Ausgangsformulierung sind in Tabelle 2 zusammengefasst.

Zu der Ausgangsformulierung wurden jeweils unterschiedliche Mengen an verschiedenen Vergleichs-Tensiden sowie erfindungsgemäßen Tensiden (T1) und/oder Co-Tensiden (T2) zugegegeben. Die genauen Mengen (Angabe in Gew.-%) sind in Tabelle 2 zusammengefasst.

Die folgenden Formulierungen C1 bis C4 wurden durch Zugabe der genannten Tenside zu der Ausgangsformulierung hergestellt:
C1 = oben beschriebene Ausgangs-Formulierung ohne Zugabe von weiterem Tensid [Referenz]
C2 = Zugabe von nichtionischem Tensid T-01 [Vergleichsbeispiel]
C3 = Zugabe von anionischem Tensid T-02 [Vergleichsbeispiel]
C4 = Zugabe von anionischem Tensid T-03 [Vergleichsbeispiel]

Die folgenden erfindungsgemäßen Formulierungen V1 bis V6 enthalten verschiedene alkoxylierten Fettsäurealkohole (Tensid (T1)) und teilweise ein Co-Tensid (T2) und/oder einen Entschäumer AF-01 auf Basis eines modifiziertes Silans wie in Tabelle 2 angegeben.
V1 = Zugabe von Tensid T-04
V2 = Zugabe von Tensid T-04 und Co-Tensid CT-01
V3 = Zugabe von Tensid T-05
V4 = Zugabe von Tensid T-05 und Co-Tensid CT-01
V5 = Zugabe von Tensid T-05 und Tensid T-02 als Co-Tensid
V6 =Zugabe von Tensid T-05, Co-Tensid CT-01 und eines Entschäumer

Die chemische Beschreibung der eingesetzten Komponenten (Tenside, Co-Tenside, Entschäumer) sind in Tabelle 1 zusammengestellt.

**Tabelle 1: Beschreibung der eingesetzten Komponenten**

| | |
|---|---|
| Tensid T-01 | 2-Ethylhexylethoxylat mit 8 EO-Einheiten |
| Tensid T-02 | Natrium-Alkyl-Phenolether-sulfat |
| Tensid T-03 | Fettalkoholetherphosphat |
| Tensid T-04 | alkoxylierter C₈₋₁₂-Alkohol mit insgesamt 7 bis 11 mol Alkoxy-Einheiten (Ethylenoxid und Propylenoxid) |
| Tensid T-05 | alkoxylierter Isotridecan-1-ol mit insgesamt 7 bis 11 mol Alkoxy-Einheiten (Ethylenoxid und Propylenoxid) |
| Co-Tensid CT-01 | C₁₃-Oxo-Alkohol-Ethoxylat |
| Entschäumer AF-01 | Modifiziertes Silan |

**Tabelle 2: Zusammensetzungen der Beschichtungsformulierungen (Angaben in Gew.-%)**

| | C1 Ref. | C2 | C3 | C4 | V1 | V2 | V3 | V4 | V5 | V6 |
|---|---|---|---|---|---|---|---|---|---|---|
| Polymer X | 18,7 | 18,7 | 18,7 | 18,7 | 18,7 | 18,7 | 18,7 | 18,7 | 18,7 | 18,7 |
| H₃PO₄ | 4 | 4 | 4 | 4 | 4 | 4 | 4 | 4 | 4 | 4 |
| MSA | 1 | 1 | 1 | 1 | 1 | 1 | 1 | 1 | 1 | 1 |
| ZnO | 1 | 1 | 1 | 1 | 1 | 1 | 1 | 1 | 1 | 1 |
| MBS | 0,3 | 0,3 | 0,3 | 0,3 | 0,3 | 0,3 | 0,3 | 0,3 | 0,3 | 0,3 |
| T-01 | | 0,8 | | | | | | | | |
| T-02 | | | 0,8 | | | | | | 0,5 | |
| T-03 | | | | 0,8 | | | | | | |
| T-04 | | | | | 0,3 | 0,3 | | | | |
| T-05 | | | | | | | 0,3 | 0,3 | 0,3 | 0,3 |
| CT-01 | | | | | | 0,5 | | 0,5 | | 0,5 |
| AF-01 | | | | | | | | | | 0,01 |

### Beispiel 2: Kontaktwinkelmessungen

Mit den in Tabelle 2 beschriebenen Beschichtungsformulierungen wurden Kontaktwinkelmessungen bei 23 °C unter Verwendung des Geräts Contact Angle system Typ OCA 15 Plus (Fa. Dataphysics) und einer Tropfengröße von 4 µl durchgeführt. Der Kontaktwinkel wurde nach 5 s, 30 s und nach 120 s nach Aufbringen des Tropfens gemessen. Als Oberfläche wurde ein Prüfbleche (Surtech 133, Fa. Surtech) verwendet, welches zuvor wie in Beispiel 3 beschrieben gereinigt, abgespült und getrocknet wurde. Die Ergebnisse der Kontaktwinkelmessungen sind in Tabelle 3 zusammengefasst

**Tabelle 3: Kontaktwinkel [°] (23 °C)**

| | C1 Ref. | C2 | C3 | C4 | V1 | V2 | V3 | V4 | V5 | V6 |
|---|---|---|---|---|---|---|---|---|---|---|
| 5s | 28 | 22 | 25 | 27 | 14 | 13 | 12 | 12 | 10 | 12 |
| 20 s | 26 | 20 | 22 | 25 | 13 | 12 | 11 | 10 | 9 | 11 |
| 120 s | 24 | 17 | 20 | 24 | 12 | 11 | 10 | 9 | 8 | 10 |

Es zeigt sich, dass die Zusammensetzungen mit den erfindungsgemäßen Tensiden (V1 bis V6) schon nach 5 s einen deutlich geringeren Kontaktwinkel und damit eine bessere Benetzung aufweisen als die Vergleichszusammensetzungen C2 bis C4 und die Referenz C1.

Weiterhin zeigt sich, dass sich der Kontaktwinkel nach 5 s nicht mehr maßgeblich ändert, das heißt dass die vollständige Benetzung der Oberfläche unter Verwendung der erfindungsgemäßen Tenside deutlich schneller erfolgt. Somit kann bei Trocknung des Nassfilms eine gleichmäßige Passivierungsschicht ausgebildet werden.

### Beispiel 3:

Unter Verwendung der in Beispiel 1 beschriebenen Zusammensetzungen wurden beschichtete Prüfbleche aus heiß verzinktem Stahl (Gardobond OE HDG 3, 105 x 190 mm) hergestellt.

Als Vorbehandlung wurden die Prüfbleche in einer mildalkalischen Reinigerlösung (Surtech 133, Fa. Surtech) für ca. 30 Sekunden getaucht, sofort mit voll entsalztem Wasser abgespült und anschließend mit Stickstoff getrocknet. Die gereinigten Bleche wurden bei Raumtemperatur für jeweils 1 s in die in Tabelle 1 aufgeführten Formulierungen getaucht, mit einem Walzensystem abgequetscht und für 12 s bei 160°C im Trockenschrank getrocknet. Die Peak-Metal-Temperature (PMT) im Zuge der Trocknung überstieg hierbei nicht 50°C.

Die so erhaltenen beschichteten Prüfbleche wurden hinsichtlich ihrer Korrosionsbeständigkeit getestet. Es wurde der Salzsprühtest, der Kondenswasser-WechselklimaTest (KWT) und der Stapeltest wie im Beispiel 4 beschrieben durchgeführt. Die Testergebnisse sind in der Tabelle 4 zusammengefasst.

**Tabelle 4: Testergebnisse zur Korrosionsbeständigkeit**

| | | C1 Ref. | C2 | C3 | C4 | V1 | V2 | V3 | V4 | V5 | V6 |
|---|---|---|---|---|---|---|---|---|---|---|---|
| Auflage | [g/m2] | 0,5 | 0,5 | 0,5 | 0,5 | 0,5 | 0,5 | 0,5 | 0,5 | 0,5 | 0,5 |
| Salzsprühtest DIN ISO 9227 | 24h | 10 | 10 | 10 | 10 | 10 | 10 | 10 | 10 | 10 | 10 |
| | 48h | 8 | 8 | 8 | 8 | 10 | 10 | 10 | 10 | 10 | 10 |
| | 72h | 3 | 3 | 3 | 3 | 9 | 9 | 10 | 9 | 9 | 9 |
| | 96h | 0 | 0 | 0 | 0 | 8 | 8 | 9 | 8 | 8 | 8 |
| KWT DIN ISO 6270-2 | 21 Zyklen | 0-1 | 0-1 | 0-1 | 0-1 | 1 | 1 | 1 | 1 | 0-1 | 1 |
| Stacktest | 1Tag | 0 | 0 | 0 | 0 | 0 | 0 | 0 | 0 | 0 | 0 |
| | 7 Tage | 3 | 3 | 3 | 3 | 1 | 1 | 1 | 1 | 1 | 1 |
| | 14 Tage | 4 | 4 | 4 | 4 | 2 | 2 | 2 | 2 | 2 | 2 |

Es zeigte sich, dass Beschichtungen mit den erfindungsgemäßen Zusammensetzungen eine deutlich bessere Korrosionsbeständigkeit aufweisen im Vergleich zu Prüfblechen, die mit einer Vergleichslösung beschichtet wurden.

Darüber hinaus wurden die wie oben beschrieben beschichteten Prüfbleche hinsichtlich der gleichmäßigen Auftragung optisch beurteilt, nachdem sie 1 Tag unter Klimabedingungen gemäß DIN EN ISO 6270-2 gelagert wurden. Die mit der Referenzlösung C1 sowie mit der Vergleichslösung C2 beschichteten Prüfbleche wiesen deutliche Applikationsmuster in Form von Streifen oder Flecken auf. Dagegen wies das mit der erfindungsgemäßen Formulierung V2 beschichtete Prüfblech eine ebene Oberfläche ohne Applikationsmuster auf.

### Beispiel 4

Zur Beurteilung der Passivierungsschicht wurden die im Folgenden beschriebenen und in Tabelle 4 zusammengefassten Testverfahren durchgeführt.

### a) Salzsprühtest (DIN EN ISO 9227)

Die Güte des Korrosionsschutzes der gemäß Beispiel 2 beschichteten Prüfbleche wurde im neutralen Salzsprühtest gemäß DIN EN ISO 9227 bewertet, indem nach vorgegebenen Standards Bewertungszahlen von 0 bis 10 vergeben werden. Die Bewertungszahl oder der Bewertungsgrad ist ein Maß für die Entstehung von Weißrost auf dem Blech.

Je höher die Bewertungszahl, desto geringer der Anteil der korrodierten Fläche [%] und desto besser der Korrosionsschutz. Die Vergabe der Bewertungszahlen erfolgte gemäß Tabelle 5. Es wurde ein Mittelwert aus 5 Blechen gebildet:

**Tabelle 5: Bewertungsschema Salzsprühtest**

| Korrodierte Fläche [%] | Bewertungszahl |
|---|---|
| kein Fehler | 10 |
| 0<A<0,1 | 9 |
| 0,1<A<0,25 | 8 |
| 0,25<A<0,5 | 7 |
| 0,5<A<1,0 | 6 |
| 1,0<A<2,5 | 5 |
| 2,5<A<5,0 | 4 |
| 5,0<A<10 | 3 |
| 10<A<25 | 2 |
| 25<A<50 | 1 |
| 50<A | 0 |

### b) Kondenswasser-Wechselklimatest KWT (DIN EN ISO 6270-2)

Des Weiteren wurden die Bleche im Kondenswasser-Wechselklimatest (KWT) gemäß der DIN EN ISO 6270-2 geprüft. Dieser besteht aus einem oder mehreren Klimazyklen mit jeweils zwei Prüfabschnitten.

Im ersten Abschnitt werden die Prüfkörper 8 Stunden mit einer Temperatur von 40°C und einer relativen Luftfeuchtigkeit von 100%, im zweiten Abschnitt bei einer Temperatur von 18-28°C bei einer Luftfeuchtigkeit von unter 100% (Umgebungsbedingungen), belastet. Die Dauer eines Zyklus beträgt 24 Stunden. Die optische Beurteilung der Proben erfolgte nach folgenden Kriterien als Mittelwert von 3 Blechen:
0 kein Auskreiden
1 leichtes Auskreiden
2 mittelstarkes Auskreiden
3 starkes Auskreiden
4 sehr starkes Auskreiden

### c) Stapeltest "Stack-Test"

Die Beständigkeit der wie oben beschrieben beschichteten Prüfbleche wurden in einem so genannten Stapeltest "Stack-Test" gegeneinander verglichen.

Hierzu wurden drei beschichtete Bleche in der Mitte geteilt, mit je 5 ml destilliertem Wasser benetzt und mit den Prüfseiten aufeinander gelegt. Die Prüfung erfolgte in einer Klimawechselkammer, wo die Stapel ("Stacks") mit einem 5kg Gewicht beschwert und einer definierten Anzahl Zyklen ausgesetzt wurden (DIN EN ISO 6270-2, AHT).

Die Bewertung der Korrosion erfolgte als Mittelwert von 3 Blechen nach folgendem Bewertungsschema:
0 = keine Veränderung gegenüber frischem Blech optisch in Ordnung
1 = beginnende Weißung / Auskreidung (0- 20% der Fläche weiß)
2 = deutliche Weißung / Auskreidung und beginnender Weißrost (20-50% der Fläche weiß)
3 = starke Weißung / Auskreidung (50-80% der Fläche weiß)
4 = vollständig korrodiert (80-100% der Fläche weiß)

### d) Bestimmung des Auflagegewichts

Die Bestimmung des Auflagegewichts wurde gravimetrisch durch Differenzmessung der Tara vor und nach dem Beschichten jeweils im entmagnetisierten und trockenen Zustand der Prüfbleche bestimmt. Die Tara wird dann auf die Fläche der jeweiligen Bleche umgerechnet und in [g/m²] angegeben.

## Patentansprüche

1. Verfahren zum Passivieren einer metallischen Oberfläche, bei dem eine metallische Oberfläche mit einer wässrigen Zusammensetzung enthaltend die folgenden Komponenten in Kontakt gebracht wird:
a) mindestens ein wasserlösliches, saure Gruppen umfassendes Polymer (X), wobei das Polymer (X) mindestens 0,6 mol Säuregruppen/100 g Polymer aufweist;
b) mindestens ein Tensid der allgemeinen Formel (T1) 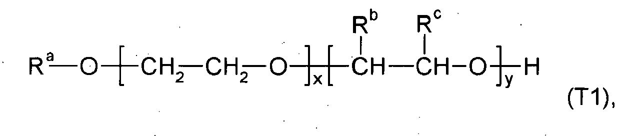 wobei
R^{a} ein verzweigter oder linearer Alkylrest mit 8 bis 18 Kohlenstoffatomen ist,
x eine ganze Zahl von 2 bis 12 ist,
y eine ganze Zahl von 1 bis 10 ist,
R^{b} Wasserstoff oder ein verzweigter oder linearer Alkylrest mit 1 bis 4 Kohlenstoffatomen ist,
R^{c} Wasserstoff oder ein verzweigter oder linearer Alkylrest mit 1 bis 4 Kohlenstoffatomen ist,
mit der Maßgabe, dass mindestens einer der Rest R^{b} oder R^{c} nicht Wasserstoff ist;
c) optional mindestens ein Co-Tensid (T2);
d) mindestens ein Lösemittel (L), enthaltend mindestens 80 Gew.-% Wasser;
e) optional mindestens eine weitere Komponente (K);
wobei der pH-Wert der Zusammensetzung im Bereich von 0,5 bis 5 liegt.

2. Verfahren gemäß Anspruch 1, **dadurch gekennzeichnet, dass** eine Zusammensetzung eingesetzt wird enthaltend:
a) 10 bis 40 Gew.-% mindestens eines wasserlöslichen, saure Gruppen umfassenden Polymers (X), wobei das Polymer (X) mindestens 0,6 mol Säuregruppen /100 g Polymer aufweist;
b) 0,1 bis 1 Gew.-% mindestens eines Tensids der allgemeinen Formel (T1) 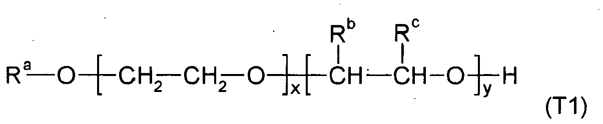 wobei
R^{a} ein verzweigter oder linearer Alkylrest mit 8 bis 18 Kohlenstoffatomen ist,
x eine ganze Zahl von 5 bis 8 ist,
y eine ganze Zahl von 1 bis 4 ist,
R^{b} Wasserstoff oder ein verzweigter oder linearer Alkylrest mit 1 bis 4 Kohlenstoffatomen ist,
R^{c} Wasserstoff oder ein verzweigter oder linearer Alkylrest mit 1 bis 4 Kohlenstoffatomen ist;
mit der Maßgabe, dass mindestens einer der Rest R^{b} oder R^{c} nicht Wasserstoff ist;
c) 0 bis 2 Gew.-% mindestens eines Co-Tensids (T2);
d) 20 bis 89 Gew.-% mindestens eines Lösemittels (L), enthaltend mindestens 80 Gew.-% Wasser;
e) 0 bis 30 Gew.-% mindestens einer weiteren Komponente (K).

3. Verfahren gemäß einem der Ansprüche 1 oder 2, **dadurch gekennzeichnet, dass** die wässrige Zusammensetzung mindestens ein Tensid der allgemeinen Formel (T1) enthält, wobei
R^{a} ein verzweigter oder linearer Alkylrest mit 10 bis 14 Kohlenstoffatomen ist,
x eine ganze Zahl von 5 bis 8 ist,
y eine ganze Zahl von 1 bis 4 ist,
R^{b} ausgewählt ist aus Methyl und Ethyl,
R^{c} Wasserstoff ist.

4. Verfahren gemäß einem der Ansprüche 1 bis 3, **dadurch gekennzeichnet, dass** die wässrige Zusammensetzung 0,1 bis 2 Gew.-% mindestens eines Co-Tensides (T2) ausgewählt aus der Gruppe bestehend aus C₈₋₂₀-Alkylsulfaten, C₈₋₂₀-Alkylarylsulfaten, C₈₋₂₀-Alkylsulfonaten, C₈₋₂₀-Alkylarylsulfonaten und ethoxylierten Alkoholen umfassend einen linearen oder verzweigten, gesättigten oder ungesättigten C₈₋₂₀-Alkylrest und umfassend 2 bis 14 Ethylenoxid-Einheiten enthält.

5. Verfahren gemäß einem der Ansprüche 1 bis 4, **dadurch gekennzeichnet, dass** es sich bei dem wasserlöslichen Polymeren (X) um ein Copolymer handelt, welches aus den folgenden Monomeren aufgebaut ist:
| | |
|---|---|
| M1: 30 bis 90 Gew.-% | Methacrylsäure und/oder Acrylsäure; |
| M2: 10 bis 70 Gew.-% | mindestens eines weiteren von (M1) verschiedenen, monoethylenisch ungesättigten Monomers, welches eine oder mehrere saure Gruppen aufweist; |
| optional M3: 0 bis 40 Gew.-% | mindestens eines OH-Gruppen aufweisenden Methacrylsäureesters und/oder Acrylsäureesters; |
| optional M4: 0 bis 30 Gew.-% | mindestens eines weiteren, von (M1), (M2) oder (M3) verschiedenen ethylenisch ungesättigten Monomers. |

6. Verfahren gemäß einem der Ansprüche 1 bis 5, **dadurch gekennzeichnet, dass** es sich bei dem wasserlöslichen Polymeren (X) um ein Copolymer handelt, welches aus den folgenden Monomeren aufgebaut ist:
| | |
|---|---|
| M1: 20 bis 60 Gew.-% | Acrylsäure; |
| M2: 20 bis 60 Gew.-% | Vinylphosphonsäure; |
| M3: 1 bis 40 Gew.-% | Hydroxyethylacrylat. |

7. Verfahren gemäß einem der Ansprüche 1 bis 6, **dadurch gekennzeichnet, dass** es sich bei der metallischen Oberfläche um eine Oberfläche bestehend im Wesentlichen aus einem oder mehreren Metallen ausgewählt aus der Gruppe bestehend aus Zink (Zn), Aluminium (Al) und Magnesium (Mg) handelt.

8. Verfahren gemäß einem der Ansprüche 1 bis 7, **dadurch gekennzeichnet, dass** die wässrige Zusammensetzung auf die metallische Oberfläche in Form eines Nassfilms aufgebracht wird, wobei die wässrige Zusammensetzung in einem Auftragsgewicht im Bereich von 0,3 bis 2 g/m² (bezogen auf die Summe der Feststoffe der wässrigen Zusammensetzung) auf die metallische Oberfläche aufgebracht wird.

9. Verfahren gemäß einem der Ansprüche 1 bis 8, **dadurch gekennzeichnet, dass** es sich um ein kontinuierliches Verfahren zur Passivierung von verzinkten Stahlbändern in einer Bandbeschichtungsanlage im Anschluss an die Verzinkung handelt.

10. Zusammensetzung zum Passivieren einer metallischen Oberfläche enthaltend
a) 10 bis 40 Gew.-% mindestens eines wasserlöslichen, saure Gruppen umfassenden Polymers (X), wobei das Polymer (X) mindestens 0,6 mol Säuregruppen/100 g des Polymeres aufweist;
b) 0,1 bis 1 Gew.-% mindestens eines Tensids der allgemeinen Formel (T1) 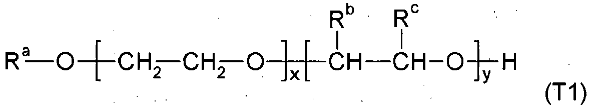 wobei
R^{a} ein verzweigter oder linearer Alkylrest mit 8 bis 18 Kohlenstoffatomen ist,
x eine ganze Zahl von 2 bis 12 ist,
y eine ganze Zahl von 1 bis 10 ist,
R^{b} Wasserstoff oder ein verzweigter oder linearer Alkylrest mit 1 bis 4 Kohlenstoffatomen ist,
R^{c} Wasserstoff oder ein verzweigter oder linearer Alkylrest mit 1 bis 4 Kohlenstoffatomen ist,
mit der Maßgabe, dass mindestens einer der Rest R^{b} oder R^{c} nicht Wasserstoff ist;
c) 0 bis 2 Gew.-% mindestens eines Co-Tensids (T2);
d) 20 bis 89 Gew.-% mindestens eines Lösemittels (L), enthaltend mindestens 80 Gew.-% Wasser;
e) 0 bis 30 Gew.-% mindestens einer weiteren Komponente (K).

11. Zusammensetzung gemäß Anspruch 10, **dadurch gekennzeichnet, dass** in der Zusammensetzung 0,1 bis 2 Gew.-% mindestens eines Co-Tensides (T2) enthalten sind, ausgewählt aus der Gruppe bestehend aus C₈₋₂₀-Alkylsulfaten, C₈₋₂₀-Alkylarylsulfaten, C₈₋₂₀-Alkylsulfonaten, C₈₋₂₀-Alkylarylsulfonaten und ethoxylierten Alkoholen umfassend einen linearen oder verzweigten, gesättigten oder ungesättigten C₈₋₂₀-Alkylrest und umfassend 2 bis 14, bevorzugt 4 bis 10, Ethylenoxid-Einheiten.

12. Verwendung einer Zusammensetzung gemäß einem der Ansprüche 10 oder 11 zur Passivierung einer metallischen Oberfläche, bestehend im Wesentlichen aus einem oder mehreren Metallen ausgewählt aus der Gruppe Zink (Zn), Aluminium (Al) und Magnesium (Mg).

13. Beschichtung auf einer metallischen Oberfläche erhältlich durch in Kontakt Bringen der metallischen Oberfläche mit einer wässrigen Zusammensetzung enthaltend die folgenden Komponenten:
a) mindestens ein wasserlösliches, saure Gruppen umfassendes Polymer (X), wobei das Polymer (X) mindestens 0,6 mol Säuregruppen / 100 g Polymer aufweist;
b) mindestens ein Tensid der allgemeinen Formel (T1) 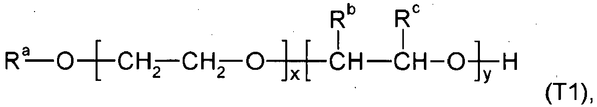 wobei
R^{a} ein verzweigter oder linearer Alkylrest mit 8 bis 18, insbesondere mit 10 bis 14; insbesondere 10 bis 13 Kohlenstoffatomen ist,
x eine ganze Zahl von 2 bis 12, bevorzugt von 5 bis 8, ist,
y eine ganze Zahl von 1 bis 10, bevorzugt von 1 bis 4 ist,
R^{b} Wasserstoff oder ein verzweigter oder linearer Alkylrest mit 1 bis 4 Kohlenstoffatomen ist, bevorzugt ist R^{b} ausgewählt aus Methyl oder Ethyl,
R^{c} Wasserstoff oder ein verzweigter oder linearer Alkylrest mit 1 bis 4 Kohlenstoffatomen ist; bevorzugt ist R^{c} Wasserstoff,
mit der Maßgabe, dass mindestens einer der Rest R^{b} oder R^{c} nicht Wasserstoff ist;
c) optional mindestens ein Co-Tensid (T2);
d) mindestens ein Lösemittel (L), enthaltend mindestens 80 Gew.-% Wasser;
e) optional mindestens eine weitere Komponente (K);
wobei der pH-Wert der Zusammensetzung im Bereich von 0,5 bis 5 liegt.

14. Beschichtung gemäß Anspruch 13, **dadurch gekennzeichnet, dass** die Beschichtung zusätzlich eine oder mehrere Lackschichten aufweist.

## Claims

1. A method for passivating a metallic surface, wherein a metallic surface is contacted with an aqueous composition comprising the following components:
a) at least one water-soluble polymer (X) comprising acidic groups, the polymer (X) having at least 0.6 mol of acid groups/100 g of polymer;
b) at least one surfactant of the general formula (T1) 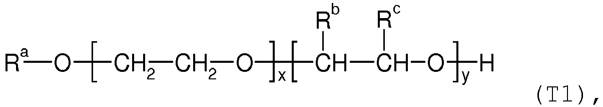 where
R³ is a branched or linear alkyl radical having 8 to 18 carbon atoms,
x is an integer from 2 to 12,
y is an integer from 1 to 10,
R^{b} is hydrogen or a branched or linear alkyl radical having 1 to 4 carbon atoms,
R^{c} is hydrogen or a branched or linear alkyl radical having 1 to 4 carbon atoms,
with the proviso that at least one radical, R^{b} or R^{c}, is not hydrogen;
c) optionally at least one cosurfactant (T2);
d) at least one solvent (L), comprising at least 80% by weight of water;
e) optionally at least one further component (K);
the pH of the composition being in the range from 0.5 to 5.

2. The method according to claim 1, wherein a composition is used comprising:
a) 10% to 40% by weight of at least one water-soluble polymer (X) comprising acidic groups, the polymer (X) having at least 0.6 mol of acid groups/100 g of polymer;
b) 0.1% to 1% by weight of at least one surfactant of the general formula (T1) 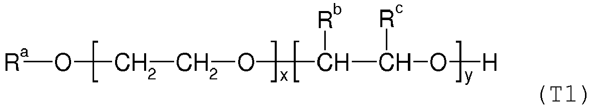 where
R^{a} is a branched or linear alkyl radical having 8 to 18 carbon atoms,
x is an integer from 5 to 8,
y is an integer from 1 to 4,
R^{b} is hydrogen or a branched or linear alkyl radical having 1 to 4 carbon atoms,
R^{c} is hydrogen or a branched or linear alkyl radical having 1 to 4 carbon atoms;
with the proviso that at least one radical, R^{b} or R^{c}, is not hydrogen;
c) 0% to 2%by weight of at least one cosurfactant (T2) ;
d) 20% to 89% by weight of at least one solvent (L), comprising at least 80% by weight of water;
e) 0% to 30% by weight of at least one further component (K).

3. The method according to either of claims 1 and 2, wherein the aqueous composition comprises at least one surfactant of the general formula (T1) where
R^{a} is a branched or linear alkyl radical having 10 to 14 carbon atoms,
x is an integer from 5 to 8,
y is an integer from 1 to 4,
R^{b} is selected from methyl and ethyl, and
R^{c} is hydrogen.

4. The method according to any of claims 1 to 3, wherein the aqueous composition comprises 0.1% to 2% by weight of at least one cosurfactant (T2) selected from the group consisting of C₈₋₂₀ alkyl sulfates, C₈₋₂₀ alkyl aryl sulfates, C₈₋₂₀ alkylsulfonates, C₈₋₂₀ alkylarylsulfonates, and ethoxylated alcohols comprising a linear or branched, saturated or unsaturated C₈₋₂₀ alkyl radical and comprising 2 to 14 ethylene oxide units.

5. The method according to any of claims 1 to 4, wherein the water-soluble polymer (X) is a copolymer synthesized from the following monomers:
| | |
|---|---|
| M1: | 30% to 90% by weight of methacrylic acid and/or acrylic acid; |
| M2: | 10% to 70% by weight of at least one further monoethylenically unsaturated monomer, different from (M1), which has one or more acidic groups; |
| optionally M3: | 0% to 40% by weight of at least one OH-containing methacrylic ester and/or acrylic ester; |
| optionally M4: | 0% to 30% by weight of at least one further ethylenically unsaturated monomer, different from (M1), (M2) or (M3). |

6. The method according to any of claims 1 to 5, wherein the water-soluble polymer (X) is a copolymer which is synthesized from the following monomers:
| | |
|---|---|
| M1: | 20% to 60% by weight ofacrylic acid; |
| M2: | 20% to 60% by weight of vinylphosphonic acid; |
| M3: | 1% to 40% by weight of hydroxyethyl acrylate. |

7. The method according to any of claims 1 to 6, wherein the metallic surface is a surface consisting substantially of one or more metals selected from the group consisting of zinc (Zn), aluminum (Al) and magnesium (Mg).

8. The method according to any of claims 1 to 7, wherein the aqueous composition is applied to the metallic surface in the form of a wet film, the aqueous composition being applied at a coatweight in the range from 0.3 to 2 g/m² (based on the sum of the solids in the aqueous composition) to the metallic surface.

9. The method according to any of claims 1 to 8, which is a continuous method for passivating galvanized steel coils on a coil-coating line following galvanization.

10. A composition for passivating a metallic surface, comprising
a) 10% to 40% by weight of at least one water-soluble polymer (X) comprising acidic groups, the polymer (X) having at least 0.6 mol of acid groups/100 g of polymer;
b) 0.1% to 1% by weight of at least one surfactant of the general formula (T1) 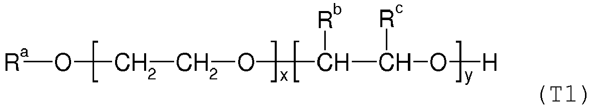 where
R^{a} is a branched or linear alkyl radical having 8 to 18 carbon atoms,
x is an integer from 2 to 12,
y is an integer from 1 to 10,
R^{b} is hydrogen or a branched or linear alkyl radical having 1 to 4 carbon atoms,
R^{c} is hydrogen or a branched or linear alkyl radical having 1 to 4 carbon atoms,
with the proviso that at least one radical, R^{b} or R^{c}, is not hydrogen;
c) 0% to 2%by weight of at least one cosurfactant (T2) ;
d) 20% to 89% by weight of at least one solvent (L), comprising at least 80% by weight of water;
e) 0% to 30% by weight of at least one further component (K).

11. The composition according to claim 10, said composition comprising 0.1% to 2% by weight of at least one cosurfactant (T2) selected from the group consisting of C₈₋₂₀ alkyl sulfates, C₈₋₂₀ alkyl aryl sulfates, C₈₋₂₀ alkylsulfonates, C₈₋₂₀ alkylarylsulfonates, and ethoxylated alcohols comprising a linear or branched, saturated or unsaturated C₈₋₂₀ alkyl radical and comprising 2 to 14, preferably 4 to 10, ethylene oxide units.

12. The use of a composition according to either of claims 10 and 11 for passivating a metallic surface consisting substantially of one or more metals selected from the group of zinc (Zn), aluminum (Al) and magnesium (Mg).

13. A coating on a metallic surface, obtainable by contacting the metallic surface with an aqueous composition comprising the following components:
a) at least one water-soluble polymer (X) comprising acidic groups, the polymer (X) having at least 0.6 mol of acid groups/100 g of polymer;
b) at least one surfactant of the general formula (T1) 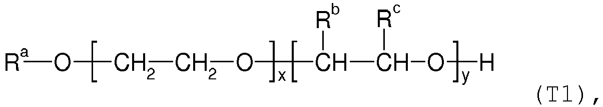 where
R^{a} is a branched or linear alkyl radical having 8 to 18, more particularly having 10 to 14, more particularly 10 to 13 carbon atoms,
x is an integer from 2 to 12, preferably from 5 to 8,
y is an integer from 1 to 10, preferably from 1 to 4,
R^{b} is hydrogen or a branched or linear alkyl radical having 1 to 4 carbon atoms, R^{b} being preferably selected from methyl or ethyl,
R^{c} is hydrogen or a branched or linear alkyl radical having 1 to 4 carbon atoms; R^{c} is preferably hydrogen,
with the proviso that at least one radical, R^{b} or R^{c}, is not hydrogen;
c) optionally at least one cosurfactant (T2);
d) at least one solvent (L), comprising at least 80% by weight of water;
e) optionally at least one further component (K);
the pH of the composition being in the range from 0.5 to 5.

14. The coating according to claim 13, wherein the coating additionally has one or more coating-material coats.

## Revendications

1. Procédé pour la passivation d'une surface métallique, dans lequel on met une surface métallique en contact avec une composition aqueuse contenant les composants suivants :
a) au moins un polymère (X) hydrosoluble, comprenant des groupes acides, le polymère (X) comportant au moins 0,6 mole de groupes acides/100 g de polymère ;
b) au moins un tensioactif de formule générale (T1) 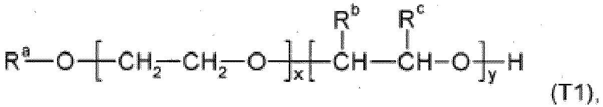 dans laquelle
R^{a} est un radical alkyle linéaire ou ramifié ayant de 8 à 18 atomes de carbone,
x est un nombre entier valant de 2 à 12,
y est un nombre entier valant de 1 à 10,
R^{b} est un atome d'hydrogène ou un radical alkyle linéaire ou ramifié ayant de 1 à 4 atomes de carbone,
R^{c} est un atome d'hydrogène ou un radical alkyle linéaire ou ramifié ayant de 1 à 4 atomes de carbone,
étant entendu qu'au moins un des radicaux R^{b} ou R^{c} n'est pas un atome d'hydrogène ;
c) en option au moins un co-tensioactif (T2) ;
d) au moins un solvant (L), contenant au moins 80 % en poids d'eau ;
e) en option au moins un autre composant (K) ;
le pH de la composition se situant dans l'intervalle de 0,5 à 5.

2. Procédé selon la revendication 1, **caractérisé en ce qu'**on utilise une composition contenant :
a) 10 à 40 % en poids d'au moins un polymère (X) hydrosoluble, comprenant des groupes acides, le polymère (X) comportant au moins 0,6 mole de groupes acides/ 100 g de polymère ;
b) 0,1 à 1 % en poids d'au moins un tensioactif de formule générale (T1) 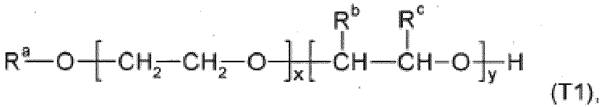 dans laquelle
R^{a} est un radical alkyle linéaire ou ramifié ayant de 8 à 18 atomes de carbone,
x est un nombre entier valant de 5 à 8,
y est un nombre entier valant de 1 à 4,
R^{b} est un atome d'hydrogène ou un radical alkyle linéaire ou ramifié ayant de 1 à 4 atomes de carbone,
R^{c} est un atome d'hydrogène ou un radical alkyle linéaire ou ramifié ayant de 1 à 4 atomes de carbone ;
étant entendu qu'au moins un des radicaux R^{b} ou R^{c} n'est pas un atome d'hydrogène ;
c) 0 à 2 % en poids d'au moins un co-tensioactif (T2) ;
d) 20 à 89 % en poids d'au moins un solvant (L), contenant au moins 80 % en poids d'eau ;
e) 0 à 30 % en poids d'au moins un autre composant (K).

3. Procédé selon l'une quelconque des revendications 1 et 2, **caractérisé en ce que** la composition aqueuse contient au moins un tensioactif de formule générale (T1), dans laquelle
R^{a} est un radical alkyle linéaire ou ramifié ayant de 10 à 14 atomes de carbone,
x est un nombre entier valant de 5 à 8,
y est un nombre entier valant de 1 à 4,
R^{b} est choisi parmi méthyle et éthyle,
R^{c} est un atome d'hydrogène.

4. Procédé selon l'une quelconque des revendications 1 à 3, **caractérisé en ce que** la composition aqueuse contient 0,1 à 2 % en poids d'au moins un co-tensioactif (T2) choisi dans le groupe consistant en des alkyl(C₈-C₂₀) sulfates, alkylaryl(C₈-C₂₀) sulfates, alkyl(C₈-C₂₀)sulfonates, alkylaryl(C₈-C₂₀)sulfonates et des alcools éthoxylés comprenant un radical alkyle en C₈-C₂₀ linéaire ou ramifié, saturé ou insaturé et comprenant 2 à 14 unités oxyde d'éthylène.

5. Procédé selon l'une quelconque des revendications 1 à 4, **caractérisé en ce que** pour ce qui est du polymère hydrosoluble (X) il s'agit d'un copolymère qui est constitué des monomères suivants :
| | |
|---|---|
| M1 : | 30 à 90 % en poids d'acide méthacrylique et/ou d'acide acrylique ; |
| M2 : | 10 à 70 % en poids d'au moins un autre monomère à insaturation monoéthylénique, différent de (M1), qui comporte un ou plusieurs groupes acides ; |
| en option M3 : | 0 à 40 % en poids d'au moins un ester d'acide acrylique et/ou ester |
| | d'acide méthacrylique comportant des groupes OH ; |
| en option M4 : | 0 à 30 % en poids d'au moins un autre monomère à insaturation éthylénique, différent de (M1), (M2) ou (M3). |

6. Procédé selon l'une quelconque des revendications 1 à 5, **caractérisé en ce que** pour ce qui est du polymère (X) hydrosoluble il s'agit d'un copolymère qui est constitué des monomères suivants :
| | |
|---|---|
| M1 : | 20 à 60 % en poids d'acide acrylique ; |
| M2 : | 20 à 60 % en poids d'acide vinylphosphonique ; |
| M3 : | 1 à 40 % en poids d'acrylate d'hydroxyéthyle. |

7. Procédé selon l'une quelconque des revendications 1 à 6, caractérisé en ce pour ce qui est de la surface métallique il s'agit d'une surface constituée essentiellement d'un ou de plusieurs métaux choisis dans le groupe consistant en zinc (Zn), aluminium (Al) et magnésium (Mg).

8. Procédé selon l'une quelconque des revendications 1 à 7, **caractérisé en ce qu'**on applique sur la surface métallique la composition aqueuse sous forme d'un film humide, en appliquant sur la surface métallique la composition aqueuse en un poids d'application dans la plage de 0,3 à 2 g/m³ (par rapport à la somme des matières solides de la composition aqueuse).

9. Procédé selon l'une quelconque des revendications 1 à 8, **caractérisé en ce qu'**il s'agit d'un procédé continu pour la passivation de rubans d'acier galvanisés dans une unité d'enduction de rubans à la suite de la galvanisation.

10. Composition destinée à la passivation d'une surface métallique, contenant
a) 10 à 40 % en poids d'au moins un polymère (X) hydrosoluble, comprenant des groupes acides, le polymère (X) comportant au moins 0,6 mole de groupes acides/ 100 g du polymère ;
b) 0,1 à 1 % en poids d'au moins un tensioactif de formule générale (T1) 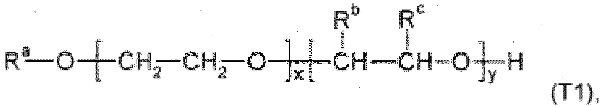 dans laquelle
R^{a} est un radical alkyle linéaire ou ramifié ayant de 8 à 18 atomes de carbone,
x est un nombre entier valant de 2 à 12,
y est un nombre entier valant de 1 à 10,
R^{b} est un atome d'hydrogène ou un radical alkyle linéaire ou ramifié ayant de 1 à 4 atomes de carbone,
R^{c} est un atome d'hydrogène ou un radical alkyle linéaire ou ramifié ayant de 1 à 4 atomes de carbone, étant entendu qu'au moins un des radicaux R^{b} ou R^{c} n'est pas un atome d'hydrogène ;
c) 0 à 2 % en poids d'au moins un co-tensioactif (T2) ;
d) 20 à 89 % en poids d'au moins un solvant (L), contenant au moins 80 % en poids d'eau ;
e) 0 à 30 % en poids d'au moins un autre composant (K).

11. Composition selon la revendication 10, **caractérisée en ce que** dans la composition sont contenus 0,1 à 2 % en poids d'au moins un co-tensioactif (T2) choisi dans le groupe consistant en des alkyl (C₈-C₂₀) sulfates, alkylaryl (C₈-C₂₀) sulfates, alkyl (C₈-C₂₀) sulfonates, alkylaryl (C₈-C₂₀) sulfonates et des alcools éthoxylés comprenant un radical alkyle en C₈-C₂₀ linéaire ou ramifié, saturé ou insaturé et comprenant 2 à 14, de préférence 4 à 10, unités oxyde d'éthylène.

12. Utilisation d'une composition selon l'une quelconque des revendications 10 et 11 pour la passivation d'une surface métallique constituée essentiellement d'un ou de plusieurs métaux choisis dans le groupe consistant en zinc (Zn), aluminium (Al) et magnésium (Mg).

13. Revêtement sur une surface métallique, pouvant être obtenu par mise en contact de la surface métallique avec une composition aqueuse contenant les composants suivants :
a) au moins un polymère (X) hydrosoluble, comprenant des groupes acides, le polymère (X) comportant au moins 0,6 mole de groupes acides/100 g de polymère ;
b) au moins un tensioactif de formule générale (T1) 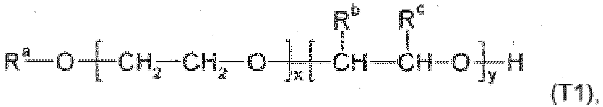 dans laquelle
R^{a} est un radical alkyle linéaire ou ramifié ayant de 8 à 18, en particulier ayant de 10 à 14 ; en particulier de 10 à 13 atomes de carbone,
x est un nombre entier valant de 2 à 12, de préférence de 5 à 8,
y est un nombre entier valant de 1 à 10, de préférence de 1 à 4,
R^{b} est un atome d'hydrogène ou un radical alkyle linéaire ou ramifié ayant de 1 à 4 atomes de carbone, de préférence R^{b} est choisi parmi méthyle et éthyle,
R^{c} est un atome d'hydrogène ou un radical alkyle linéaire ou ramifié ayant de 1 à 4 atomes de carbone ; de préférence R^{c} est un atome d'hydrogène,
étant entendu qu'au moins un des radicaux R^{b} ou R^{c} n'est pas un atome d'hydrogène ;
c) en option au moins un co-tensioactif (T2) ;
d) au moins un solvant (L), contenant au moins 80 % en poids d'eau ;
e) en option au moins un autre composant (K) ;
le pH de la composition se situant dans l'intervalle de 0,5 à 5.

14. Revêtement selon la revendication 13, **caractérisé en ce que** le revêtement comporte en outre une ou plusieurs couches de peinture.
